(19) Europäisches Patentamt
European Patent Office
Office européen des brevets

(11) Veröffentlichungsnummer: **0 003 215**
**B1**

(12) **EUROPÄISCHE PATENTSCHRIFT**

(45) Veröffentlichungstag der Patentschrift: **17.06.81**

(21) Anmeldenummer: **78101461.8**

(22) Anmeldetag: **27.11.78**

(51) Int. Cl.³: **C 07 C 69/74,**
C 07 C 69/76,
C 07 C 69/92,
C 07 C 121/75, C 09 K 3/34

# (54) Cyclohexanderivate, diese enthaltende flüssigkristalline Dielektrika und ihre Verwendung als Komponenten flüssigkristalliner Dielektrika.

(30) Priorität: **07.01.78 DE 2800553**

(43) Veröffentlichungstag der Anmeldung:
**08.08.79 Patentblatt 79/16**

(45) Bekanntmachung des Hinweises auf die Patenterteilung:
**17.06.81 Patentblatt 81/24**

(84) Benannte Vertragsstaaten:
**CH DE FR GB NL**

(56) Entgegenhaltungen:
**US - A - 4 029 595**

(73) Patentinhaber: **Merck Patent Gesellschaft mit beschränkter Haftung**
**Frankfurter Strasse 250**
**D-6100 Darmstadt (DE)**

(72) Erfinder: **Krause, Joachim, Dr.**
**Samuel-Morse-Strasse 14**
**D-6110 Dieburg (DE)**
Erfinder: **Eidenschink, Rudolf, Dr.**
**Dessauer Strasse 5**
**D-6110 Dieburg (DE)**
Erfinder: **Pohl, Ludwig, Dr.**
**Hoffmannstrasse 54**
**D-6100 Darmstadt (DE)**

**EP 0 003 215 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Cyclohexanderivate, diese enthaltende flüssigkristalline Dielektrika und ihre Verwendung als Komponenten flüssigkristalliner Dielektrika

Die Erfindung betrifft Cyclohexanderivate, Verfahren zu ihrer Herstellung und ihre Verwendung als Bestandteile von flüssigkristallinen Materialien, insbesondere von Dielektrika für Flüssigkristall-Anzeigeelemente.

Für Flüssigkristall-Anzeigeelemente werden die Eigenschaften nematischer oder nematischcholesterischer flüssigkristalliner Materialien ausgenutzt, ihre optischen Eigenschaften wie Lichtdurchlässigkeit, Lichtstreuung, Doppelbrechung, Reflexionsvermögen oder Farbe unter dem Einfluß elektrischer Felder signifikant zu verändern. Die funktion derartiger Anzeigeelemente beruht dabei beispielsweise auf den Phänomenen der dynamischen Streuung, der Deformation aufgerichteter Phasen oder dem Schadt-Helfrich-Effekt in der verdrillten Zelle.

Für die technische Anwendung dieser Effekte in Flüssigkristall-Anzeigeelementen werden flüssigkristalline Materialien benötigt, die einer Vielzahl von Anforderungen genügen müssen. Besonders wichtig sind hier die chemische Beständigkeit gegenüber Feuchtigkeit. Luft und physikalischen Einflüssen wie Wärme, Strahlung im infraroten, sichtbaren und ultravioletten Bereich und elektrische Gleich- und Wechselfelder. Ferner wird von technisch verwendbaren flüssigkristallinen Materialien eine flüssigkristalline Mesophase im Temperaturbereich von mindestens 0°C bis + 60°C, bevorzugt von − 20°C bis + 80°C, und eine Viskosität bei Raumtemperatur von nicht mehr als 70 cP gefordert. Schließlich dürfen sie im Bereich des sichtbaren Lichts keine Eigenabsorption aufweisen, d.h., sie müssen farblos sein.

Es ist bereits eine Anzahl von flüssigkristallinen Verbindungen bekannt, die den an Dielektrika für elektronische Bauelemente gestellten Stabilitätsanforderungen genügen und auch farblos sind. Hierzu gehören insbesondere die in der deutschen Offenlegungsschrift 2 139 628 beschriebenen p,p'-disubstituierten Benzoesäurephenylester und die in der deutschen Offenlegungsschrift 2 356 085 beschriebenen p,p'-disubstituierten Biphenylderivate. In beiden genannten Verbindungsklassen wie auch in anderen bekannten Reihen von Verbindungen mit flüssigkristalliner Mesophase gibt es keine Einzelverbindungen, die in dem geforderten Temperaturbereich von 0°C bis 60°C eine flüssigkristalline nematische Mesophase ausbilden. Es werden daher in der Regel Mischungen von zwei oder mehreren Verbindungen hergestellt, um als flüssigkristalline Dielektrika verwendbare Substanzen zu erhalten. Hierzu mischt man gewöhnlich mindestens eine Verbindung mit niedrigem Schmelz- und Klärpunkt mit einer anderen mit deutlich höherem Schmelz- und Klärpunkt. Hierbei wird normalerweise ein Gemisch erhalten, dessen Schmelzpunkt bei einer tieferen oder etwa der gleichen Temperatur wie der Schmelzpunkt der niedriger schmelzenden Komponente liegt, während der Klärpunkt zwischen den Klärpunkten der Komponenten liegt.

Als Komponenten mit höheren Schmelz- und Klärpunkten sind bisher beispielsweise 4,4''-disubstituierte p-Benzoyloxybenzoesäurephenylester der allgemeinen Formel (II)

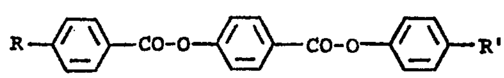

(II)

oder die Biphenylesterderivate der allgemeinen Formel (III)

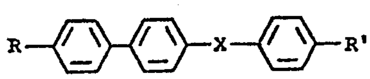

(III)

worin R und R' Alkyl- oder Alkoxygruppen sind und X eine Carbonyloxygruppe bedeutet, verwendet worden. Die Verbindungen der allgemeinen Formel (II) haben jedoch keinen großen Anwendungsbereich gefunden, weil sie den sie enthaltenden flüssigkristallinen Dielektrika eine hohe Viskosität verleihen; dadurch werden die Schaltzeiten der damit hergestellten Flüssigkristall-Anzeigeelemente in unerwünschter Weise verlängert. Dieser Effekt wird zwar bei der Verwendung der Biphenylester der allgemeinen Formel (III) nicht beobachtet, diese Verbindungen sind jedoch, vor allem bei tiefen Temperaturen, in den wichtigsten flüssigkristallinen Basismaterialien nicht gut löslich wie es zur Anhebung des Klärpunkts erwünscht ist.

Es wurde nun gefunden, daß die Cyclohexanderivate der allgemeinen Formel (I)

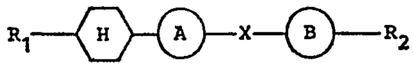

(I)

worin

die Ringe A und B gleich oder verschieden sind und jeweils einen 1,4-disubstituierten Phenyl- oder Cyclohexylring bedeuten, sowie

X —CO—O— oder —O—CO—,

$R_1$ Alkyl mit 1—8 Kohlenstoffatomen

$R_2$ Alkyl mit 1—8 Kohlenstoffatomen oder, wenn der Ring B ein Phenylring ist, auch Alkoxy oder Alkanoyloxy mit bis zu 8 Kohlenstoffatomen oder —CN bedeutet,

hervorragend als Mischungskomponenten flüssigkristalliner Dielektrika geeignet sind.

Die Cyclohexanderivate der allgemeinen Formel (I) besitzen Schmelz- und Klärpunkte in ähnlichen Temperaturbereichen wie die analogen Biphenylester, sind jedoch in einigen flüssigkristallinen Basismaterialien wie beispielsweise den Phenylcyclohexanderrivaten nach der deutschen Patentanmeldung P 26 36 684 deutlich besser löslich als die Biphenylester. Sie ermöglichen dadurch die Herstellung von Dielektrika für Flüssigkristall-Anzeigeelemente, die aus einer geringeren Anzahl von Komponenten bestehen als bisher verwendete Dielektrika mit vergleichbaren Eigenschaften.

Es wurde weiter gefunden, daß Dielektrika für Flüssigkristallanzeigeelemente, die mindestens ein Cyclohexanderivat der allgemeinen Formel (I) enthalten, eine besonders geringe Temperaturabhängigkeit der Schwellenspannung aufweisen. Diese Eigenschaft ist wesentlich für Flüssigkristall-Anzeigeelemente mit hoher Informationsdichte, insbesondere für solche, die im Multiplexbetrieb arbeiten.

Gegenstand der Erfindung sind somit die Cyclohexanderivate der allgemeinen Formel (I) sowie Verfahren zu ihrer Herstellung.

Gegenstand der Erfindung ist weiterhin die Verwendung der Cyclohexanderivate der allgemeinen Formel (I) in Gemischen mit anderen flüssigkristallinen Substanzen als Dielektrika in Flüssigkristall-Anzeigeelementen.

Gegenstand der Erfindung sind ferner Dielektrika für Flüssigkristall-Anzeigeelemente mit mindestens zwei flüssigkristallinen Komponenten, von denen mindestens eine ein Cyclohexanderivat der allgemeinen Formel (I) ist.

Bevorzugte Gruppen der Cyclohexanderivate der allgemeinen Formel (I) sind die der allgemeinen Formeln (Ia) bis (Id), das sind:

4-(4-Alkylcyclohexyl)-benzoesäurephenylester bzw. para-substituierte Benzoesäure-4-(4-alkylcyclohexyl)-phenylester der allgemeinen Formel (Ia)

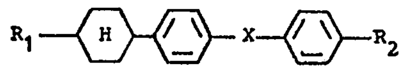 (Ia);

4 - (4 - Alkylcyclohexyl) - benzoesäure - 4 - alkylcyclohexylester bzw. 4 - Alkyl-cyclohexancarbonsäure - 4 - (4 - alkylcyclohexyl)-phenylester der allgemeinen Formel (Ib)

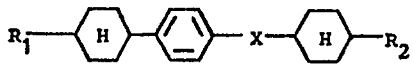 (Ib);

4-(4-Alkylcyclohexyl)-cyclohexancarbonsäure-phenylester bzw. para-substituierte Benzoesäure-4-(4-alkylcyclohexyl)-cyclohexyl-(1)-ester der allgemeinen Formel (Ic)

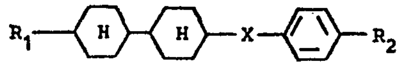 (Ic);

4 - (4 - Alkylcyclohexyl) - cyclohexancarbonsäure - 4 - alkylcyclohexylester bzw. 4 - Alkylcyclohexancarbonsäure - 4 - (4 - alkylcyclohexyl) - cyclohexyl - (1) - ester der allgemeinen Formel (Id)

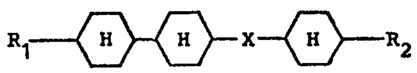 (Id).

In diesen Formeln (Ia) bis (Id) besitzen $R_1$, $R_2$ und X die in der allgemeinen Formel (I) angegebene Bedeutung. In allen erfindungsgemäßen Cyclohexanderivaten der allgemeinen Formeln (I) und (Ia) bis (Id) sind die jeweiligen Substituenten in den 1- und 4-Stellungen der Cyclohexanringe *trans*-ständig angeordnet; in den Formelbildern ist dies durch die schwarze Markierung auf der rechten Seite der Cyclohexanringe symbolisiert.

Aus der US—A—4 029 595 sind den erfindungsgemäßen Cyclohexylbenzoesäure-phenylestern (Formel Ia, X = —CO—O) strukturelle ähnliche Verbindungen mit einem Phenylcyclohexancarbonsäure-phenylester-Gerüst bekannt, die gleichfalls in Flüssigkristall-Anzeigeelementen Verwendung finden. Gegenüber diesen vorbekannten besitzen die erfindungsgemäßen Verbindungen in der Regel deutlich breitere mesomorphe Temperaturbereiche; soweit in den erfindungsgemäßen Verbindungen der Rest $R_2$ eine Cyanogruppe ist, besitzen diese darüberhinaus auch eine deutliche größere dielektrische Anisotropie als die analog substituierten vorbekannten Verbindungen nach der US—A—4 029 595.

Die erfindungsgemäßen Cyclohexanderivate der allgemeinen Formel (I), in denen X —CO—O— bedeutet, werden aus besonders gut zugänglichen Ausgangsmaterialien hergestellt und sind daher bevorzugt.

Der Substituent $R_1$ in den Verbindungen der allgemeinen Formel (I) kann geradkettig oder verzweigt sein. Wenn $R_1$ geradkettig ist, also Methyl, Äthyl, n-Propyl, n-Butyl, n-Pentyl, n-Hexyl, n-Heptyl oder n-Octyl bedeutet, besitzen die dadurch charakterisierten Verbindungen der allgemeinen Formel (I) in der Regel besonders hohe Klärpunkte. Besonders bevorzugt sind die Verbindungen der allgemeinen Formel (I), in denen $R_1$ ein Alkylrest mit 1—7, vorzugsweise mit 1—6 C-Atomen ist. Gelegentlich sind jedoch auch Verbindungen der allgemeinen Formel (I) mit verzweigtem Substituenten $R_1$ von Bedeutung, da diese häufig bessere Löslichkeitseigenschaften in den üblichen flüssigkristallinen Grundmischungen aufweisen. Solche nicht geradkettigen Substituenten $R_1$ enthalten vorzugsweise nicht mehr als eine Kettenverzweigung. Bevorzugte verzweigte Substituenten sind die, in denen die Kohlenstoffkette am bindenden Kohlenstoffatom oder einem der beiden nächsten Kohlenstoffatome verzweigt ist. Von Bedeutung sind unter diesen solche verzweigten Gruppen, in denen sich an einer längeren Kohlenstoffkette in 1-, 2- oder 3-Stellung eine Methyl- oder Äthylgruppe befindet, beispielsweise Isopropyl, 1-Methylpropyl, 2-Methylpropyl, 1-Methylbutyl, 2-Methylbutyl, 3-Methylbutyl, 1-Methylpentyl, 1-Äthylpentyl, 2-Methylpentyl, 1-Methylhexyl, 2-Äthylhexyl oder 1-Methylheptyl.

Wenn der Substituent $R_2$ in den Verbindungen der allgemeinen Formel (I) eine Alkylgruppe ist, gilt für diese das vorstehend für den Substituenten $R_1$ ausgeführte. In analoger Weise gilt es auch für den Alkylteil einer an einem Phenylring B befindlichen Alkoxy- oder Alkanoyloxygruppe, wobei dieser Alkylteil bei der letzteren jedoch nicht mehr als 7 Kohlenstoffatome aufweist. Vorzugsweise enthalten jedoch die Verbindungen der allgemeinen Formel (I) nicht mehr als einen Substituenten mit verzweigter Kohlenstoffkette; die größte Bedeutung haben die erfindungsgemäßen Cyclohexanderivate, in denen beide Flügelgruppen $R_1$ und $R_2$ geradkettige Kohlenstoffketten enthalten. Wenn der Ring B ein Phenylring ist, sind die Verbindungen mit der Cyanogruppe als Flügelgruppe $R_2$ besonders bevorzugt.

Die Herstellung der erfindungsgemäßen Cyclohexanderivate erfolgt nach Standardverfahren, wie sie in der Literatur für Carbonsäureester vielfach beschrieben sind. Bevorzugt werden die neuen Verbindungen dadurch hergestellt, daß man eine Cyclohexanverbindung der allgemeinen Formel (IV)

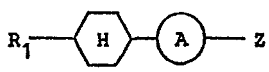
(IV)

worin

Z OH, OMe, COOH oder ein reaktionsfähiges Derivat der Carboxylgruppe und

Me ein Äquivalent eines Metallkations bedeutet,

bei einer Temperatur zwischen $-50°C$ und $+250°C$, gegebenenfalls in Gegenwart eines organischen Lösungsmittels und/oder eines üblichen Veresterungskatalysators, mit einer Verbindung der allgemeinen Formel (V)

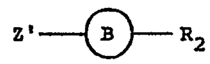
(V)

worin

Z' COOH oder ein reaktionsfähiges Derivat der Carboxylgruppe bedeutet, wenn Z OH oder OMe ist, und OH oder OMe bedeutet, wenn Z COOH oder ein reaktionsfähiges Carboxylgruppenderivat ist,

umsetzt. Dabei werden 4-(4-$R_1$-Cyclohexyl)-benzoesäureester oder 4-(4-$R_1$-Cyclohexyl)-cyclohexancarbonsäureester erhalten, wenn Z COOH oder ein reaktionsfähiges Derivat davon, vorzugsweise —CO-Halogen, insbesondere —COCl, —COO-Niederalkyl, insbesondere —$COOCH_3$ oder eine Anhydridgruppierung, vorzugsweise ein gemischtes Anhydrid, wie zum Beispiel —$COOCOCH_3$ ist. Die Gruppe Z' in der Verbindung der Formel (V) ist in diesem Falle eine Hydroxylgruppe oder eine Alkoholatgruppe, vorzugsweise eine Alkalimetall- oder Erdalkalimetallalkoholatgruppe. Die Reaktionsbedingungen für das erfindungsgemäße Verfahren werden weitgehend von der Natur der Gruppen Z und Z' bestimmt. So wird eine Carbonsäure mit einem Alkohol (Z, Z' = COOH, OH) in der Regel in Gegenwart einer starken Säure, beispielsweise einer Mineralsäure wie Salzsäure oder Schwefelsäure, umgesetzt. Eine bevorzugte Reaktionsweise ist die Umsetzung eines Säureanhydrids oder insbesondere eines Säurechlorids mit einem Alkohol (Z,Z' = COCl, OH). Vorzugsweise werden diese Veresterungsreaktionen in einem basischen Milieu durchgeführt, wobei als Basen insbesondere Alkalimetallhydroxide wie Natrium- oder Kaliumhydroxid, Alkalimetallcarbonate bzw. -hydrogencarbonate wie Natriumcarbonat, Natriumhydrogencarbonat, Kaliumcarbonat oder Kaliumhydrogencarbonat, Alkalimetallacetate wie Natrium- oder Kaliumacetat, Erdalkalimetallhydroxide wie Calciumhydroxid oder organische Basen wie Triäthylamin, Pyridin, Lutidin, Kollidin oder Chinolin von Bedeutung sind.

Die Veresterungen werden vorteilhaft in Gegenwart eines inerten Lösungsmittels durchgeführt. Gut geeignet sind insbesondere Äther wie Diäthyläther, Di-n-butyläther, Tetrahydrofuran, Dioxan oder Anisol, Ketone wie Aceton, Butanon, Pentanon-(3) oder Cyclohexanon, Amide wie Dimethylformamid oder Hexamethylphosphorsäuretriamid, Kohlenwasserstoffe wie Benzol, Toluol oder Xylol, Halogenkohlenwasserstoffe wie Tetrachlorkohlenstoff oder Tetrachloräthylen und Sulfoxide wie Dimethylsulfoxid oder Sulfolan. Mit Wasser nicht mischbare Lösungsmittel können gleichzeitig vorteilhaft zum azeotropen Abdestillieren des bei der Veresterung gebildeten Wassers verwendet werden. Gelegentlich kann auch ein Überschuß einer verwendeten organischen Base, zum Beispiel Pyridin, Chinolin oder Triäthylamin als Lösungsmittel für die Veresterung angewandt werden. Prinzipiell können die Veresterungsreaktionen nach der Erfindung auch in Abwesenheit eines Lösungsmittels, zum Beispiel durch einfaches Erhitzen der Komponenten in Gegenwart von Natriumacetat, durchgeführt werden.

Die Reaktionstemperatur liegt gewöhnlich zwischen $-50°C$ und $+250°C$, vorzugsweise

zwischen $-20°C$ und $+80°C$. Bei diesen Temperaturen sind die Veresterungsreaktionen in der Regel nach 15 Minuten bis 48 Stunden beendet.

Eine weitere bevorzugte Ausführungsform des Verfahrens nach der Erfindung besteht darin, daß man den zu veresternden Alkohol der Formel IV bzw. V (Z bzw. $Z' = OH$) zunächst in sein Natrium- oder Kaliumsalz überführt, zum Beispiel durch Behandeln mit äthanolischer Natron- oder Kalilauge, dieses Salz isoliert und zusammen mit Natriumhydrogenkarbonat oder Kaliumcarbonat unter Rühren in Aceton oder Diäthyläther suspendiert, und diese Suspension tropfenweise unter Rühren mit einer Lösung eines Saürechlorids oder Anhydrids in Diäthyläther, Aceton oder Dimethylformamid versetzt. Dabei wird das Reaktionsgemisch auf einer Temperatur zwischen $-25°C$ und $+20°C$, vorzugsweise bei $-10°C$ bis $-20°C$ gehalten. Bei dieser Arbeitsweise ist die Veresterungsreaktion gewöhnlich nach 15 bis 50 Minuten beendet.

Die Ausgangsmaterialien für die Herstellung der erfindungsgemäßen Cyclohexanderivate sind zum Teil bekannt, wie beispielsweise die in der 4-Stellung substituierten Alkohole bzw. Carbonsäuren der allgemeinen Formel (V), zum Teil können sie ohne Schwierigkeiten nach Standardverfahren der organischen Chemie aus literaturbekannten Verbindungen hergestellt werden. So sind beispielsweise die Carbonsäuren der allgemeinen Formel (IV) ($Z = COOH$) Zwischenprodukte bei den Synthesen der in der deutschen Patentanmeldung P 26 36 684 und P 27 02 548 beschriebenen Phenylcyclohexane bzw. Cyclohexylcyclohexane.

Die 4-(4-$R_1$-Cyclohexyl)-phenole der allgemeinen Formel (IV) ($Z = OH$) können zum Beispiel durch Umsetzung der entsprechenden 4-$R_1$-Cyclohexanone mit 4-Methoxyphenylmagnesiumbromid, Säurebehandlung des Reaktionsprodukts zur Hydrolyse der magnesiumorganischen Verbindung unter gleichzeitiger Ätherspaltung der Methoxygruppe, chromatografische Trennung des erhaltenen Stereoisomerengemisches und katalytische Reduktion der tertiären alicyclischen Hydroxylgruppe unter Retention bzw. Inversion der Konfiguration hergestellt werden. Durch schärfere katalytische Hydrierung lassen sich aus den so erhaltenen 4-(4-$R_1$-Cyclohexyl)-phenolen auch die 4-(4-$R_1$-Cyclohexyl)-cyclohexanole herstellen.

Die Verbindungen der allgemeinen Formel (I) sind wertvolle Komponenten flüssigkristalliner Dielektrika, die zur Herstellung elektrooptischer Anzeigeelemente verwendet werden.

Die erfindungsgemäßen Dielektrika bestehen aus zwei oder mehr Komponenten, darunter mindestens eine der allgemeinen Formel (I). Die weiteren Komponenten sind vorzugsweise nematische oder nematogene Substanzen aus den Klassen der Azobenzole, Azoxybenzole, Biphenyle, Schiffschen Basen, insbesondere Benzyliden-Derivate, Phenylbenzoate, Phenylcyclohexane, gegebenenfalls halogenierten Stilbene, Diphenylacetylen-Derivate, Diphenylnitrone und substituierten Zimtsäuren. Die wichtigsten als derartige weitere Komponenten in Frage kommenden Verbindungen lassen sich durch die allgemeine Formel (VI) charakterisieren:

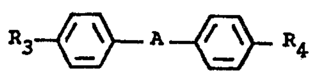 (VI)

worin

A —CH =CH—

—CX' =CH—

—CH =CX'

—C ≡C—

—N =N—

—N(O) =N—

—N =N(O)—

—O —CO—

—CO —O—

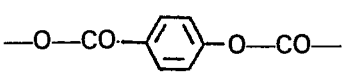

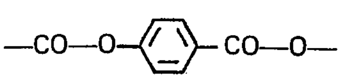

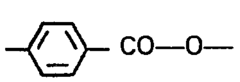

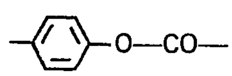

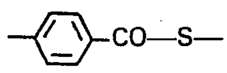

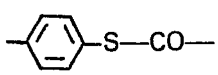

—CH =N—

—N =CH—

—CH =N(O)—

—S    —CO—    —N(O(    =CH—

—CO    —S—    oder eine C—C-Einfachbindung

bedeutet; wenn A —CO—O—, —O—CO— oder eine C—C-Einfachbindung bedeutet, kann einer der beiden Phenylringe auch durch einen trans-Cyclohexylring ersetzt sein; X' bedeutet Halogen, vorzugsweise Cl. $R_3$ und $R_4$ sind gleich oder verschieden und können Alkyl-, Alkoxy-, Alkanoyl-, Alkanoyloxy- oder Alkoxycarbonyloxyreste mit bis zu 18, vorzugsweise bis zu 8 C-Atomen bedeuten; weiterhin kann einer dieser Reste auch eine Cyano-, Nitro- oder Isonitrilgruppe bedeuten. Bei den meisten dieser Verbindungen sind $R_3$ und $R_4$ vorzugsweise verschieden, wobei einer der Reste meist eine Alkyl- oder Alkoxygruppe bedeutet. Aber auch eine große Zahl anderer Varianten der vorgesehenen Substituienten sind gebräuchlich. Viele solcher nematischen Substanzen sind im Handel erhältlich.

Die erfindungsgemäßen Dielektrika enthalten bis zu 50, normalerweise 1—40, vorzugsweise 5—40 Gewichtsteile einer oder mehrerer Verbindungen der Formel (I).

Durch diese Zusätze werden — abhängig von der Art und Zusammensetzung der flüssigkristallinen Grundsubstanz — Erhöhungen des Klärpunkts um 5 bis 40° erzielt, ohne daß sich die Viskosität der Grundsubstanz und damit die Schaltzeit von mit derartigen Dielektrika hergestellten Anzeigeelementen in unerwünschter Weise verändert. Gleichzeitig zeigen die erfindungsgemäßen Dielektrika eine überraschend geringe Temperaturabhängigkeit der Schwellenspannung.

Durch geeignete Zusätze können die flüssigkristallinen Dielektrika nach der Erfindung so modifiziert werden, daß die in allen bisher bekannt gewordenen Arten von Anzeigeelementen angewandt werden können. Derartige Zusätze sind dem Fachmann bekannt und sind in der einschlägigen Literatur ausführlich beschrieben. Beispielsweise können Substanzen zur Veränderung der dielektrischen Anisotropie und/oder der Orientierung der nematischen Phasen zugesetzt werden. Derartige Substanzen sind zum Beispiel in den DE—OS 22 09 127, 23 21 632 und 26 11 453 beschrieben.

Die folgenden Beispiele sollen die Erfindung erläutern, ohne sie zu begrenzen. In den Beispielen bedeutet F. den Schmelzpunkt. S./N. den Umwandlungspunkt einer smektischen in eine nematische Phase, und K. den Klärpunkt einer flüssigkristallinen Substanz in Grad Celsius; Siedetemperaturen sind mit Kp. bezeichnet. Wenn nichts anderes angegeben ist, bedeuten Angaben von Teilen oder Prozent Gewichsteile bzw. Gewichtsprozent.

Beispiel 1

Zu einer siedenden Lösung von 16,5 g 4-n-Pentylphenol und 10 ml Pyridin in 120 ml Toluol wird im Lauf von 2 Stunden unter Rühren eine Lösung von 29,3 g 4-(4-n-Pentylcyclohexyl)-benzoylchlorid (hergestellt nach Beispiel 1 der deutschen Patentanmeldung P 26 36 684) in 120 ml Toluol zugetropft. Das Reaktionsgemisch wird weitere 3 Stunden unter Rückfluß zum Sieden erhitzt und dann eingedampft. Der Rückstand wird mit 100 ml Wasser versetzt und dreimal mit je 150 ml Diäthyläther extrahiert. Die Ätherextrakte werden mit 200 ml Wasser, 150 ml 5 %iger Natriumhydrogenkarbonatlösung und weiteren 200 ml Wasser gewaschen und über Natriumsulfat getrocknet. Nach Abdestillieren des Äthers wird der zurückbleibende 4-(4-n-Pentylcyclohexyl)-benzoesäure-4'-n-pentylphenylester aus Äthanol umkristallisiert; F. 97°C, S/N. 133°C, K. 169°C.

Analog werden hergestellt:

4-(4-Methylcyclohexyl)-benzoesäure-4'-methylphenyl-ester,
4-(4-Methylcyclohexyl)-benzoesäure-4'-äthylphenyl-ester,
4-(4-Methylcyclohexyl)-benzoesäure-4'-n-propylphenyl-ester,
4-(4-Methylcyclohexyl)-benzoesäure-4'-n-butylphenyl-ester,
4-(4-Methylcyclohexyl)-benzoesäure-4'-n-pentylphenyl-ester,
4-(4-Methylcyclohexyl)-benzoesäure-4'-n-hexylphenyl-ester,
4-(4-Methylcyclohexyl)-benzoesäure-4'-n-heptylphenyl-ester,
4-(4-Methylcyclohexyl)-benzoesäure-4'-n-oktylphenyl-ester,
4-(4-Methylcyclohexyl)-benzoesäure-4'-(2-methylbutyl)-phenyl-ester,
4-(4-Methylcyclohexyl)-benzoesäure-4'-cyanophenyl-ester, F. 153°C, K. 202°C;
4-(4-Methylcyclohexyl)-benzoesäure-4'-methoxyphenyl-ester,
4-(4-Methylcyclohexyl)-benzoesäure-4'-äthoxyphenyl-ester,
4-(4-Methylcyclohexyl)-benzoesäure-4'-n-propyloxyphenyl-ester,
4-(4-Methylcyclohexyl)-benzoesäure-4'-n-butyloxyphenyl-ester,
4-(4-Methylcyclohexyl)-benzoesäure-4'-n-pentyloxyphenyl-ester,
4-(4-Methylcyclohexyl)-benzoesäure-4'-n-hexyloxyphenyl-ester,
4-(4-Methylcyclohexyl)-benzoesäure-4'-acetoxyphenyl-ester,
4-(4-Methylcyclohexyl)-benzoesäure-4'-propionyloxyphenyl-ester,
4-(4-Methylcyclohexyl)-benzoesäure-4'-n-butanoyloxyphenyl-ester,
4-(4-Methylcyclohexyl)-benzoesäure-4'-n-pentanoyloxyphenyl-ester,
4-(4-Methylcyclohexyl)-benzoesäure-4'-n-hexanoyloxyphenyl-ester,
4-(4-Methylcyclohexyl)-benzoesäure-4'-n-heptanoyloxyphenyl-ester.

4-(4-Äthylcyclohexyl)-benzoesäure-4'-methylphenyl-ester, F. 114°C, K. 162°C;
4-(4-Äthylcyclohexyl)-benzoesäure-4'-äthylphenyl-ester, F. 94°C, K. 149°C;
4-(4-Äthylcyclohexyl)-benzoesäure-4'-n-propylphenyl-ester, F. 74°C, K. 160°C;
4-(4-Äthylcyclohexyl)-benzoesäure-4'-n-butylphenyl-ester, F. 83°C, K. 148°C;
4-(4-Äthylcyclohexyl)-benzoesäure-4'-n-pentylphenyl-ester, F. 79°C, K. 152°C;
4-(4-Äthylcyclohexyl)-benzoesäure-4'-n-hexylphenyl-ester, F. 75°C, K. 141°C;
4-(4-Äthylcyclohexyl)-benzoesäure-4'-n-heptylphenyl-ester,
4-(4-Äthylcyclohexyl)-benzoesäure-4'-(2-methylbutyl)-phenyl-ester,
4-(4-Äthylcyclohexyl)-benzoesäure-4'-cyanophenyl-ester, F. 113°C, K. 215°C;
4-(4-Äthylcyclohexyl)-benzoesäure-4'-methoxyphenyl-ester,
4-(4-Äthylcyclohexyl)-benzoesäure-4'-äthoxyphenyl-ester,
4-(4-Äthylcyclohexyl)-benzoesäure-4'-n-propyloxyphenyl-ester,
4-(4-Äthylcyclohexyl)-benzoesäure-4'-n-butyloxyphenyl-ester,
4-(4-Äthylcyclohexyl)-benzoesäure-4'-n-pentyloxyphenyl-ester,
4-(4-Äthylcyclohexyl)-benzoesäure-4'-n-hexyloxyphenyl-ester,
4-(4-Äthylcyclohexyl)-benzoesäure-4'-acetoxyphenyl-ester,
4-(4-Äthylcyclohexyl)-benzoesäure-4'-propionyloxyphenyl-ester,
4-(4-Äthylcyclohexyl)-benzoesäure-4'-n-butanoyloxyphenyl-ester,
4-(4-Äthylcyclohexyl)-benzoesäure-4'-n-pentanoyloxyphenyl-ester,
4-(4-Äthylcyclohexyl)-benzoesäure-4'-n-hexanoyloxyphenyl-ester,
4-(4-Äthylcyclohexyl)-benzoesäure-4'-n-heptanoyloxyphenyl-ester.
4-(4-n-Propylcyclohexyl)-benzoesäure-4'-methylphenyl-ester, F. 122°C, K. 189°C;
4-(4-n-Propylcyclohexyl)-benzoesäure-4'-äthylphenyl-ester, F. 105°C, K. 177°C;
4-(4-n-Propylcyclohexyl)-benzoesäure-4'-n-propylphenyl-ester, F. 78°C, S./N. 87°C, K. 186°C;
4-(4-n-Propylcyclohexyl)-benzoesäure-4'-n-butylphenyl-ester, F. 88°C, K. 165°C;
4-(4-n-Propylcyclohexyl)-benzoesäure-4'-n-pentylphenyl-ester, F. 86°C, K. 173°C;
4-(4-n-Propylcyclohexyl)-benzoesäure-4'-n-hexylphenyl-ester, F. 72°C, S./N. 103°C, K. 165°C;
4-(4-n-Propylcyclohexyl)-benzoesäure-4'-n-heptylphenyl-ester,
4-(4-n-Propylcyclohexyl)-benzoesäure-4'-(2-methylbutyl)-phenyl-ester,
4-(4-n-Propylcyclohexyl)-benzoesäure-4'-cyanophenyl-ester, F. 122°C, K. 227°C;
4-(4-n-Propylcyclohexyl)-benzoesäure-4'-methoxyphenyl-ester,
4-(4-n-Propylcyclohexyl)-benzoesäure-4'-äthoxyphenyl-ester,
4-(4-n-Propylcyclohexyl)-benzoesäure-4'-n-propyloxyphenyl-ester,
4-(4-n-Propylcyclohexyl)-benzoesäure-4'-n-butyloxyphenyl-ester,
4-(4-n-Propylcyclohexyl)-benzoesäure-4'-n-pentyloxyphenyl-ester,
4-(4-n-Propylcyclohexyl)-benzoesäure-4'-n-hexyloxyphenyl-ester,
4-(4-n-Propylcyclohexyl)-benzoesäure-4'-acetoxyphenyl-ester,
4-(4-n-Propylcyclohexyl)-benzoesäure-4'-propionyloxyphenyl-ester,
4-(4-n-Propylcyclohexyl)-benzoesäure-4'-n-butanoyloxyphenyl-ester,
4-(4-n-Propylcyclohexyl)-benzoesäure-4'-n-pentanoyloxyphenyl-ester,
4-(4-n-Propylcyclohexyl)-benzoesäure-4'-n-hexanoyloxyphenyl-ester,
4-(4-n-Propylcyclohexyl)-benzoesäure-4'-n-heptanoyloxyphenyl-ester.
4-(4-n-Butylcyclohexyl)-benzoesäure-4'-methylphenyl-ester, F. 115°C, K. 180°C;
4-(4-n-Butylcyclohexyl)-benzoesäure-4'-äthylphenyl-ester, F. 101°C, K. 168C;
4-(4-n-Butylcyclohexyl)-benzoesäure-4'-n-propylphenyl-ester, F. 86°C, S./N. 90°C, K. 176°C;
4-(4-n-Butylcyclohexyl)-benzoesäure-4'-n-butylphenyl-ester, F. 91°C, S./N. 110°C, K. 165°C;
4-(4-n-Butylcyclohexyl)-benzoesäure-4'-n-pentylphenyl-ester, F. 83°C, S./N. 109°C, K. 165°C;
4-(4-n-Butylcyclohexyl)-benzoesäure-4'-n-hexylphenyl-ester, F. 88°C, S./N. 120°C, K. 159°C;
4-(4-n-Butylcyclohexyl)-benzoesäure-4'-n-heptylphenyl-ester,
4-(4-n-Butylcyclohexyl)-benzoesäure-4'-(2-methylbutyl)-phenyl-ester,
4-(4-n-Butylcyclohexyl)-benzoesäure-4'-cyanophenyl-ester, F. 104°C, K. 224°C;
4-(4-n-Butylcyclohexyl)-benzoesäure-4'-methoxyphenyl-ester,
4-(4-n-Butylcyclohexyl)-benzoesäure-4'-äthoxyphenyl-ester,
4-(4-n-Butylcyclohexyl)-benzoesäure-4'-n-propyloxyphenyl-ester,
4-(4-n-Butylcyclohexyl)-benzoesäure-4'-n-butyloxyphenyl-ester,
4-(4-n-Butylcyclohexyl)-benzoesäure-4'-n-pentyloxyphenyl-ester,
4-(4-n-Butylcyclohexyl)-benzoesäure-4'-n-hexyloxyphenyl-ester,
4-(4-n-Butylcyclohexyl)-benzoesäure-4'-acetoxyphenyl-ester,
4-(4-n-Butylcyclohexyl)-benzoesäure-4'-propionyloxyphenyl-ester,
4-(4-n-Butylcyclohexyl)-benzoesäure-4'-n-butanoyloxyphenyl-ester,
4-(4-n-Butylcyclohexyl)-benzoesäure-4'-n-pentanoyloxyphenyl-ester,
4-(4-n-Butylcyclohexyl)-benzoesäure-4'-n-hexanoyloxyphenyl-ester.
4-(4-n-Pentylcyclohexyl)-benzoesäure-4'-methylphenyl-ester, F. 108°C, K. 183°C;
4-(4-n-Pentylcyclohexyl)-benzoesäure-4'-äthylphenyl-ester, F. 90°C, S./N. 106°C, K. 171°C;
4-(4-n-Pentylcyclohexyl)-benzoesäure-4'-n-propylphenyl-ester, F. 66°C, S./N. 119°C, K. 184°C;

4-(4-n-Pentylcyclohexyl)-benzoesäure-4'-n-butylphenyl-ester, F. 74°C, S./N. 132°C, K. 169°C;
4-(4-n-Pentylcyclohexyl)-benzoesäure-4'-n-hexylphenyl-ester, F. 103°C, S/N. 138°C, K. 163°C;
4-(4-n-Pentylcyclohexyl)-benzoesäure-4'-n-heptylphenyl-ester,
4-(4-n-Pentylcyclohexyl)-benzoesäure-4'-(2-methylbutyl)-phenyl-ester,
4-(4-n-Pentylcyclohexyl)-benzoesäure-4'-cyanophenyl-ester, F. 108°C, K. 217°C;
4-(4-n-Pentylcyclohexyl)-benzoesäure-4'-methoxyphenyl-ester,
4-(4-n-Pentylcyclohexyl)-benzoesäure-4'-äthoxyphenyl-ester,
4-(4-n-Pentylcyclohexyl)-benzoesäure-4'-n-propyloxyphenyl-ester,
4-(4-n-Pentylcyclohexyl)-benzoesäure-4'-n-butyloxyphenyl-ester,
4-(4-n-Pentylcyclohexyl)-benzoesäure-4'-n-pentyloxyphenyl-ester,
4-(4-n-Pentylcyclohexyl)-benzoesäure-4'-n-hexyloxyphenyl-ester,
4-(4-n-Pentylcyclohexyl)-benzoesäure-4'-acetoxyphenyl-ester,
4-(4-n-Pentylcyclohexyl)-benzoesäure-4'-propionyloxyphenyl-ester,
4-(4-n-Pentylcyclohexyl)-benzoesäure-4'-n-butanoyloxyphenyl-ester,
4-(4-n-Pentylcyclohexyl)-benzoesäure-4'-n-pentanoyloxyphenyl-ester,
4-(4-n-Pentylcyclohexyl)-benzoesäure-4'-n-hexanoyloxyphenyl-ester.
4-(4-n-Hexylcyclohexyl)-benzoesäure-4'-methylphenyl-ester,
4-(4-n-Hexylcyclohexyl)-benzoesäure-4'-äthylphenyl-ester,
4-(4-n-Hexylcyclohexyl)-benzoesäure-4'-n-propylphenyl-ester,
4-(4-n-Hexylcyclohexyl)-benzoesäure-4'-n-butylphenyl-ester,
4-(4-n-Hexylcyclohexyl)-benzoesäure-4'-n-hexylphenyl-ester,
4-(4-n-Hexylcyclohexyl)-benzoesäure-4'-(2-methylbutyl)-phenyl-ester,
4-(4-n-Hexylcyclohexyl)-benzoesäure-4'-cyanophenyl-ester, F. 101°C, K. 208°C;
4-(4-n-Hexylcyclohexyl)-benzoesäure-4'-methoxyphenyl-ester,
4-(4-n-Hexylcyclohexyl)-benzoesäure-4'-äthoxyphenyl-ester,
4-(4-n-Hexylcyclohexyl)-benzoesäure-4'-n-propyloxyphenyl-ester,
4-(4-n-Hexylcyclohexyl)-benzoesäure-4'-n-butyloxyphenyl-ester,
4-(4-n-Hexylcyclohexyl)-benzoesäure-4'-acetoxyphenyl-ester,
4-(4-n-Hexylcyclohexyl)-benzoesäure-4'-propionyloxyphenyl-ester,
4-(4-n-Hexylcyclohexyl)-benzoesäure-4'-n-butanoyloxyphenyl-ester,
4-(4-n-Hexylcyclohexyl)-benzoesäure-4'-n-pentanoyloxyphenyl-ester.
4-(4-n-Heptylcyclohexyl)-benzoesäure-4'-methylphenyl-ester,
4-(4-n-Heptylcyclohexyl)-benzoesäure-4'-äthylphenyl-ester,
4-(4-n-Heptylcyclohexyl)-benzoesäure-4'-n-propylphenyl-ester,
4-(4-n-Heptylcyclohexyl)-benzoesäure-4'-n-butylphenyl-ester,
4-(4-n-Heptylcyclohexyl)-benzoesäure-4'-n-pentylphenyl-ester, F. 115°C, S./N. 147°C, K. 162°C;
4-(4-n-Heptylcyclohexyl)-benzoesäure-4'-(2-methylbutyl)-phenyl-ester,
4-(4-n-Heptylcyclohexyl)-benzoesäure-4'-cyanophenyl-ester, F. 104°C, K. 211°C;
4-(4-n-Heptylcyclohexyl)-benzoesäure-4'-methoxyphenyl-ester,
4-(4-n-Heptylcyclohexyl)-benzoesäure-4'-äthoxyphenyl-ester,
4-(4-n-Heptylcyclohexyl)-benzoesäure-4'-n-propyloxyphenyl-ester,
4-(4-n-Heptylcyclohexyl)-benzoesäure-4'-n-butyloxyphenyl-ester,
4-(4-n-Heptylcyclohexyl)-benzoesäure-4'-acetoxyphenyl-ester,
4-(4-n-Heptylcyclohexyl)-benzoesäure-4'-propionyloxyphenyl-ester,
4-(4-n-Heptylcyclohexyl)-benzoesäure-4'-n-butanoyloxyphenyl-ester,
4-(4-n-Heptylcyclohexyl)-benzoesäure-4'-n-pentanoyloxyphenyl-ester.
4-(4-n-Oktylcyclohexyl)-benzoesäure-4'-methylphenyl-ester,
4-(4-n-Oktylcyclohexyl)-benzoesäure-4'-äthylphenyl-ester,
4-(4-n-Oktylcyclohexyl)-benzoesäure-4'-n-propylphenyl-ester,
4-(4-n-Oktylcyclohexyl)-benzoesäure-4'-n-butylphenyl-ester,
4-(4-n-Oktylcyclohexyl)-benzoesäure-4'-(2-methylbutyl)-phenyl-ester,
4-(4-n-Oktylcyclohexyl)-benzoesäure-4'-cyanophenyl-ester,
4-(4-n-Oktylcyclohexyl)-benzoesäure-4'-methoxyphenyl-ester,
4-(4-n-Oktylcyclohexyl)-benzoesäure-4'-äthoxyphenyl-ester,
4-(4-n-Oktylcyclohexyl)-benzoesäure-4'-n-propyloxyphenyl-ester,
4-(4-n-Oktylcyclohexyl)-benzoesäure-4'-n-butyloxyphenyl-ester,
4-(4-n-Oktylcyclohexyl)-benzoesäure-4'-acetoxyphenyl-ester,
4-(4-n-Oktylcyclohexyl)-benzoesäure-4'-propionyloxyphenyl-ester,
4-(4-n-Oktylcyclohexyl)-benzoesäure-4'-n-butanoyloxyphenyl-ester.
4-[4-(2-Methylbutyl)-cyclohexyl]-benzoesäure-4'-methylphenyl-ester,
4-[4-(2-Methylbutyl)-cyclohexyl]-benzoesäure-4'-äthylphenyl-ester,
4-[4-(2-Methylbutyl)-cyclohexyl]-benzoesäure-4'-n-propylphenyl-ester,
4-[4-(2-Methylbutyl)-cyclohexyl]-benzoesäure-4'-n-butylphenyl-ester,
4-[4-(2-Methylbutyl)-cyclohexyl]-benzoesäure-4'-n-pentylphenyl-ester,
4-[4-(2-Methylbutyl)-cyclohexyl]-benzoesäure-4'-n-hexylphenyl-ester,

4-[4-(2-Methylbutyl)-cyclohexyl]-benzoesäure-4'-n-heptylphenyl-ester,
4-[4-(2-Methylbutyl)-cyclohexyl]-benzoesäure-4'-n-oktylphenyl-ester,
4-[4-(2-Methylbutyl)-cyclohexyl]-benzoesäure-4'-cyanophenyl-ester,
4-[4-(2-Methylbutyl)-cyclohexyl]-benzoesäure-4'-methoxyphenyl-ester,
4-[4-(2-Methylbutyl)-cyclohexyl]-benzoesäure-4'-äthoxyphenyl-ester,
4-[4-(2-Methylbutyl)-cyclohexyl]-benzoesäure-4'-n-propyloxyphenyl-ester,
4-[4-(2-Methylbutyl)-cyclohexyl]-benzoesäure-4'-n-butyloxyphenyl-ester,
4-[4-(2-Methylbutyl)-cyclohexyl]-benzoesäure-4'-n-pentyloxyphenyl-ester,
4-[4-(2-Methylbutyl)-cyclohexyl]-benzoesäure-4'-n-hexyloxyphenyl-ester,
4-[4-(2-Methylbutyl)-cyclohexyl]-benzoesäure-4'-acetoxyphenyl-ester,
4-[4-(2-Methylbutyl)-cyclohexyl]-benzoesäure-4'-propionyloxyphenyl-ester,
4-[4-(2-Methylbutyl)-cyclohexyl]-benzoesäure-4'-n-butanoyloxyphenyl-ester,
4-[4-(2-Methylbutyl)-cyclohexyl]-benzoesäure-4'-n-pentanoyloxyphenyl-ester,
4-[4-(2-Methylbutyl)-cyclohexyl]-benzoesäure-4'-n-hexanoyloxyphenyl-ester,
4-[4-(2-Methylbutyl)-cyclohexyl]-benzoesäure-4'-n-heptanoyloxyphenyl-ester.
4-(4-Methylcyclohexyl)-benzoesäure-4'-methylcyclohexyl-ester,
4-(4-Methylcyclohexyl)-benzoesäure-4'-äthylcyclohexyl-ester, F. 112°C, K. 100°C;
4-(4-Methylcyclohexyl)-benzoesäure-4'-n-propylcyclohexyl-ester, F. 95°C, K. 125°C;
4-(4-Methylcyclohexyl)-benzoesäure-4'-n-butylcyclohexyl-ester, F. 75°C, S./N. 83°C, K. 115°C;
4-(4-Methylcyclohexyl)-benzoesäure-4'-n-pentylcyclohexyl-ester, F. 88°C, K. 122°C;
4-(4-Methylcyclohexyl)-benzoesäure-4'-n-hexylcyclohexyl-ester,
4-(4-Methylcyclohexyl)-benzoesäure-4'-n-heptylcyclohexyl-ester,
4-(4-Methylcyclohexyl)-benzoesäure-4'-n-oktylcyclohexyl-ester.
4-(4-Äthylcyclohexyl)-benzoesäure-4'-methylcyclohexyl-ester,
4-(4-Äthylcyclohexyl)-benzoesäure-4'-äthylcyclohexyl-ester, F. 188°C, K. 111°C;
4-(4-Äthylcyclohexyl)-benzoesäure-4'-n-propylcyclohexyl-ester, F. 93°C, K. 133°C;
4-(4-Äthylcyclohexyl)-benzoesäure-4'-n-butylcyclohexyl-ester,
4-(4-Äthylcyclohexyl)-benzoesäure-4'-n-pentylcyclohexyl-ester, F. 68°C, K. 128°C;
4-(4-Äthylcyclohexyl)-benzoesäure-4'-n-hexylcyclohexyl-ester,
4-(4-Äthylcyclohexyl)-benzoesäure-4'-n-heptylcyclohexyl-ester.
4-(4-n-Propylcyclohexyl)-benzoesäure-4'-methylcyclohexyl-ester, F. 90°C, K. 127,5°C;
4-(4-n-Propylcyclohexyl)-benzoesäure-4'-äthylcyclohexyl-ester, F. 93°C, K. 135°C;
4-(4-n-Propylcyclohexyl)-benzoesäure-4'-n-propylcyclohexyl-ester, F. 92°C, K. 158°C;
4-(4-n-Propylcyclohexyl)-benzoesäure-4'-n-butylcyclohexyl-ester, F. 76°C, K. 147°C;
4-(4-n-Propylcyclohexyl)-benzoesäure-4'-n-pentylcyclohexyl-ester, F. 68°C, S./N. 74°C, K. 153°C;
4-(4-n-Propylcyclohexyl)-benzoesäure-4'-n-hexylcyclohexyl-ester,
4-(4-n-Propylcyclohexyl)-benzoesäure-4'-n-heptylcyclohexyl-ester.
4-(4-n-Butylcyclohexyl)-benzoesäure-4'-methylcyclohexyl-ester,
4-(4-n-Butylcyclohexyl)-benzoesäure-4'-äthylcyclohexyl-ester, F. 76°C, K. 125°C;
4-(4-n-Butylcyclohexyl)-benzoesäure-4'-n-propylcyclohexyl-ester, F. 69°C, K. 150°C;
4-(4-n-Butylcyclohexyl)-benzoesäure-4'-n-butylcyclohexyl-ester, F. 81°C, K. 143°C;
4-(4-n-Butylcyclohexyl)-benzoesäure-4'-n-pentylcyclohexyl-ester, F. 62°C, K. 147°C;
4-(4-n-Butylcyclohexyl)-benzoesäure-4'-n-hexylcyclohexyl-ester,
4-(4-n-Butylcyclohexyl)-benzoesäure-4'-n-heptylcyclohexyl-ester, F. 55°C, S./N. 77°C, K. 138°C;
4-(4-n-Pentylcyclohexyl)-benzoesäure-4'-methylcyclohexyl-ester, F. 67,5°C, S./N. 70°C, K. 123°C;
4-(4-n-Pentylcyclohexyl)-benzoesäure-4'-äthylcyclohexyl-ester, F. 75°C, K. 134°C;
4-(4-n-Pentylcyclohexyl)-benzoesäure-4'-n-propylcyclohexyl-ester, F. 60°C, K. 145°C;
4-(4-n-Pentylcyclohexyl)-benzoesäure-4'-n-butylcyclohexyl-ester, F. 72°C, S./N. 82°C, K. 147°C;
4-(4-n-Pentylcyclohexyl)-benzoesäure-4'-n-pentylcyclohexyl-ester, F. 70°C, S./N. 90°C, K. 156°C;
4-(4-n-Pentylcyclohexyl)-benzoesäure-4'-n-hexylcyclohexyl-ester,
4-(4-n-Pentylcyclohexyl)-benzoesäure-4'-n-heptylcyclohexyl-ester.
4-(4-n-Hexylcyclohexyl)-benzoesäure-4'-methylcyclohexyl-ester,
4-(4-n-Hexylcyclohexyl)-benzoesäure-4'-äthylcyclohexyl-ester,
4-(4-n-Hexylcyclohexyl)-benzoesäure-4'-n-propylcyclohexyl-ester,
4-(4-n-Hexylcyclohexyl)-benzoesäure-4'-n-butylcyclohexyl-ester,
4-(4-n-Hexylcyclohexyl)-benzoesäure-4'-n-pentylcyclohexyl-ester,
4-(4-n-Hexylcyclohexyl)-benzoesäure-4'-n-hexylcyclohexyl-ester,
4-(4-n-Hexylcyclohexyl)-benzoesäure-4'-n-heptylcyclohexyl-ester, F. 65°C, S./N. 115°C, K. 141°C;
4-(4-n-Heptylcyclohexyl)-benzoesäure-4'-methylcyclohexyl-ester,
4-(4-n-Heptylcyclohexyl)-benzoesäure-4'-äthylcyclohexyl-ester, F. 78°C, K. 123°C;
4-(4-n-Heptylcyclohexyl)-benzoesäure-4'-n-propylcyclohexyl-ester, F. 65°C, S./N. 85°C, K. 141°C;
4-(4-n-Heptylcyclohexyl)-benzoesäure-4'-n-butylcyclohexyl-ester, F. 68°C, S./N. 103°C, K. 139°C;
4-(4-n-Heptylcyclohexyl)-benzoesäure-4'-n-pentylcyclohexyl-ester, F. 60°C, S./N. 100°C, K. 135°C;
4-(4-n-Oktylcyclohexyl)-benzoesäure-4'-methylcyclohexyl-ester,
4-(4-n-Oktylcyclohexyl)-benzoesäure-4'-äthylcyclohexyl-ester,

4-(4-n-Oktylcyclohexyl)-benzoesäure-4'-n-propylcyclohexyl-ester.
4-[4-(2-Methylbutyl)-cyclohexyl]-benzoesäure-4'-methylcyclohexyl-ester,
4-[4-(2-Methylbutyl)-cyclohexyl]-benzoesäure-4'-äthylcyclohexyl-ester,
4-[4-(2-Methylbutyl)-cyclohexyl]-benzoesäure-4'-n-propylcyclohexyl-ester,
4-[4-(2-Methylbutyl)-cyclohexyl]-benzoesäure-4'-n-butylcyclohexyl-ester,
4-[4-(2-Methylbutyl)-cyclohexyl]-benzoesäure-4'-n-pentylcyclohexyl-ester,
4-[4-(2-Methylbutyl)-cyclohexyl]-benzoesäure-4'-n-hexylcyclohexyl-ester,
4-[4-(2-Methylbutyl)-cyclohexyl]-benzoesäure-4'-n-heptylcyclohexyl-ester,
4-[4-(2-Methylbutyl)-cyclohexyl]-benzoesäure-4'-n-oktylcyclohexyl-ester.
4-(4-Methylcyclohexyl)-cyclohexancarbonsäure-4'-methylcyclohexyl-ester,
4-(4-Methylcyclohexyl)-cyclohexancarbonsäure-4'-äthylcyclohexyl-ester,
4-(4-Methylcyclohexyl)-cyclohexancarbonsäure-4'-n-propylcyclohexyl-ester,
4-(4-Methylcyclohexyl)-cyclohexancarbonsäure-4'-n-butylcyclohexyl-ester,
4-(4-Methylcyclohexyl)-cyclohexancarbonsäure-4'-n-pentylcyclohexyl-ester,
4-(4-Methylcyclohexyl)-cyclohexancarbonsäure-4'-n-hexylcyclohexyl-ester,
4-(4-Methylcyclohexyl)-cyclohexancarbonsäure-4'-n-heptylcyclohexyl-ester,
4-(4-Methylcyclohexyl)-cyclohexancarbonsäure-4'-n-oktylcyclohexyl-ester.
4-(4-Äthylcyclohexyl)-cyclohexancarbonsäure-4'-methylcyclohexyl-ester,
4-(4-Äthylcyclohexyl)-cyclohexancarbonsäure-4'-äthylcyclohexyl-ester,
4-(4-Äthylcyclohexyl)-cyclohexancarbonsäure-4'-n-propylcyclohexyl-ester,
4-(4-Äthylcyclohexyl)-cyclohexancarbonsäure-4'-n-butylcyclohexyl-ester,
4-(4-Äthylcyclohexyl)-cyclohexancarbonsäure-4'-n-pentylcyclohexyl-ester,
4-(4-Äthylcyclohexyl)-cyclohexancarbonsäure-4'-n-hexylcyclohexyl-ester,
4-(4-Äthylcyclohexyl)-cyclohexancarbonsäure-4'-n-heptylcyclohexyl-ester.
4-(4-n-Propylcyclohexyl)-cyclohexancarbonsäure-4'-methylcyclohexyl-ester,
4-(4-n-Propylcyclohexyl)-cyclohexancarbonsäure-4'-äthylcyclohexyl-ester,
4-(4-n-Propylcyclohexyl)-cyclohexancarbonsäure-4'-n-propylcyclohexyl-ester,
4-(4-n-Propylcyclohexyl)-cyclohexancarbonsäure-4'-n-butylcyclohexyl-ester,
4-(4-n-Propylcyclohexyl)-cyclohexancarbonsäure-4'-n-pentylcyclohexyl-ester,
4-(4-n-Propylcyclohexyl)-cyclohexancarbonsäure-4'-n-hexylcyclohexyl-ester,
4-(4-n-Propylcyclohexyl)-cyclohexancarbonsäure-4'-n-heptylcyclohexyl-ester, F. 54°C, K. 182°C.
4-(4-n-Butylcyclohexyl)-cyclohexancarbonsäure-4'-methylcyclohexyl-ester,
4-(4-n-Butylcyclohexyl)-cyclohexancarbonsäure-4'-äthylcyclohexyl-ester,
4-(4-n-Butylcyclohexyl)-cyclohexancarbonsäure-4'-n-propylcyclohexyl-ester,
4-(4-n-Butylcyclohexyl)-cyclohexancarbonsäure-4'-n-butylcyclohexyl-ester,
4-(4-n-Butylcyclohexyl)-cyclohexancarbonsäure-4'-n-pentylcyclohexyl-ester,
4-(4-n-Butylcyclohexyl)-cyclohexancarbonsäure-4'-n-hexylcyclohexyl-ester,
4-(4-n-Butylcyclohexyl)-cyclohexancarbonsäure-4'-n-heptylcyclohexyl-ester,
4-(4-n-Pentylcyclohexyl)-cyclohexancarbonsäure-4'-methylcyclohexyl-ester,
4-(4-n-Pentylcyclohexyl)-cyclohexancarbonsäure-4'-äthylcyclohexyl-ester,
4-(4-n-Pentylcyclohexyl)-cyclohexancarbonsäure-4'-n-propylcyclohexyl-ester, F. 64°C, K. 182°C;
4-(4-n-Pentylcyclohexyl)-cyclohexancarbonsäure-4'-n-butylcyclohexyl-ester,
4-(4-n-Pentylcyclohexyl)-cyclohexancarbonsäure-4'-n-pentylcyclohexyl-ester,
4-(4-n-Pentylcyclohexyl)-cyclohexancarbonsäure-4'-n-hexylcyclohexyl-ester,
4-(4-n-Pentylcyclohexyl)-cyclohexancarbonsäure-4'-n-heptylcyclohexyl-ester.
4-(4-n-Hexylcyclohexyl)-cyclohexancarbonsäure-4'-methylcyclohexyl-ester,
4-(4-n-Hexylcyclohexyl)-cyclohexancarbonsäure-4'-äthylcyclohexyl-ester,
4-(4-n-Hexylcyclohexyl)-cyclohexancarbonsäure-4'-n-propylcyclohexyl-ester,
4-(4-n-Hexylcyclohexyl)-cyclohexancarbonsäure-4'-n-butylcyclohexyl-ester,
4-(4-n-Hexylcyclohexyl)-cyclohexancarbonsäure-4'-n-pentylcyclohexyl-ester.
4-(4-n-Heptylcyclohexyl)-cyclohexancarbonsäure-4'-methylcyclohexyl-ester,
4-(4-n-Heptylcyclohexyl)-cyclohexancarbonsäure-4'-äthylcyclohexyl-ester,
4-(4-n-Heptylcyclohexyl)-cyclohexancarbonsäure-4'-n-propylcyclohexyl-ester,
4-(4-n-Heptylcyclohexyl)-cyclohexancarbonsäure-4'-n-butylcyclohexyl-ester,
4-(4-n-Heptylcyclohexyl)-cyclohexancarbonsäure-4'-n-pentylcyclohexyl-ester.
4-(4-n-Oktylcyclohexyl)-cyclohexancarbonsäure-4'-methylcyclohexyl-ester,
4-(4-n-Oktylcyclohexyl)-cyclohexancarbonsäure-4'-äthylcyclohexyl-ester,
4-(4-n-Oktylcyclohexyl)-cyclohexancarbonsäure-4'-n-propylcyclohexyl-ester.
4-[4-(2-Methylbutyl)-cyclohexyl]-cyclohexancarbonsäure-4'-methylcyclohexyl-ester,
4-[4-(2-Methylbutyl)-cyclohexyl]-cyclohexancarbonsäure-4'-äthylcyclohexyl-ester,
4-[4-(2-Methylbutyl)-cyclohexyl]-cyclohexancarbonsäure-4'-n-propylcyclohexyl-ester,
4-[4-(2-Methylbutyl)-cyclohexyl]-cyclohexancarbonsäure-4'-n-butylcyclohexyl-ester,
4-[4-(2-Methylbutyl)-cyclohexyl]-cyclohexancarbonsäure-4'-n-pentylcyclohexyl-ester,
4-[4-(2-Methylbutyl)-cyclohexyl]-cyclohexancarbonsäure-4'-n-hexylcyclohexyl-ester,
4-[4-(2-Methylbutyl)-cyclohexyl]-cyclohexancarbonsäure-4'-n-heptylcyclohexyl-ester,

4-[4-(2-Methylbutyl)-cyclohexyl]-cyclohexancarbonsäure-4'-n-oktylcyclohexyl-ester.
4-Cyanobenzoesäure-4'-(4-methylcyclohexyl)-phenylester,
4-Cyanobenzoesäure-4'-(4-äthylcyclohexyl)-phenylester,
4-Cyanobenzoesäure-4'-(4-n-propylcyclohexyl)-phenylester, F. 160°C, K. 254°C;
4-Cyanobenzoesäure-4'-(4-n-butylcyclohexyl)-phenylester, F. 178°C, K. 252°C;
4-Cyanobenzoesäure-4'-(4-n-pentylcyclohexyl)-phenylester,
4-Cyanobenzoesäure-4'-(4-n-hexylcyclohexyl)-phenylester,
4-Cyanobenzoesäure-4'-(4-n-heptylcyclohexyl)-phenylester, F. 157°C, S./N. 167°C, K. 229°C;
4-Cyanobenzoesäure-4'-(4-n-oktylcyclohexyl)-phenylester,
4-Cyanobenzoesäure-4'-[4-(2-methylbutyl)-cyclohexyl]-phenylester.
4-Cyanobenzoesäure-4'-(4-methylcyclohexyl)-cyclohexylester,
4-Cyanobenzoesäure-4'-(4-äthylcyclohexyl)-cyclohexylester,
4-Cyanobenzoesäure-4'-(4-n-propylcyclohexyl)-cyclohexylester,
4-Cyanobenzoesäure-4'-(4-n-butylcyclohexyl)-cyclohexylester,
4-Cyanobenzoesäure-4'-(4-n-pentylcyclohexyl)-cyclohexylester,
4-Cyanobenzoesäure-4'-(4-n-hexylcyclohexyl)-cyclohexylester,
4-Cyanobenzoesäure-4'-(4-n-heptylcyclohexyl)-cyclohexylester,
4-Cyanobenzoesäure-4'-(4-n-oktylcyclohexyl)-cyclohexylester,
4-Cyanobenzoesäure-4'-[4-(2-methylbutyl)-cyclohexyl]-cyclohexylester.
4-Methylcyclohexancarbonsäure-4-(4-methylcyclohexyl)-phenylester,
4-Methylcyclohexancarbonsäure-4-(4-äthylcyclohexyl)-phenylester,
4-Methylcyclohexancarbonsäure-4-(4-n-propylcyclohexyl)-phenylester,
4-Methylcyclohexancarbonsäure-4-(4-n-butylcyclohexyl)-phenylester,
4-Methylcyclohexancarbonsäure-4-(4-n-pentylcyclohexyl)-phenylester,
4-Methylcyclohexancarbonsäure-4-(4-n-hexylcyclohexyl)-phenylester,
4-Methylcyclohexancarbonsäure-4-(4-n-heptylcyclohexyl)-phenylester.
4-Äthylcyclohexancarbonsäure-4-(4-methylcyclohexyl)-phenylester,
4-Äthylcyclohexancarbonsäure-4-(4-äthylcyclohexyl)-phenylester,
4-Äthylcyclohexancarbonsäure-4-(4-n-propylcyclohexyl)-phenylester,
4-Äthylcyclohexancarbonsäure-4-(4-n-butylcyclohexyl)-phenylester,
4-Äthylcyclohexancarbonsäure-4-(4-n-pentylcyclohexyl)-phenylester,
4-Äthylcyclohexancarbonsäure-4-(4-n-hexylcyclohexyl)-phenylester,
4-Äthylcyclohexancarbonsäure-4-(4-n-heptylcyclohexyl)-phenylester.
4-n-Propylcyclohexancarbonsäure-4-(4-methylcyclohexyl)-phenylester,
4-n-Propylcyclohexancarbonsäure-4-(4-äthylcyclohexyl)-phenylester,
4-n-Propylcyclohexancarbonsäure-4-(4-n-propylcyclohexyl)-phenylester, F. 110°C, K. 190°C;
4-n-Propylcyclohexancarbonsäure-4-(4-n-butylcyclohexyl)-phenylester, F. 117°C, K. 185°C;
4-n-Propylcyclohexancarbonsäure-4-(4-n-pentylcyclohexyl)-phenylester,
4-n-Propylcyclohexancarbonsäure-4-(4-n-hexylcyclohexyl)-phenylester,
4-n-Propylcyclohexancarbonsäure-4-(4-n-heptylcyclohexyl)-phenylester.
4-n-Butylcyclohexancarbonsäure-4-(4-methylcyclohexyl)-phenylester,
4-n-Butylcyclohexancarbonsäure-4-(4-äthylcyclohexyl)-phenylester,
4-n-Butylcyclohexancarbonsäure-4-(4-n-propylcyclohexyl)-phenylester,
4-n-Butylcyclohexancarbonsäure-4-(4-n-butylcyclohexyl)-phenylester,
4-n-Butylcyclohexancarbonsäure-4-(4-n-hexylcyclohexyl)-phenylester,
4-n-Butylcyclohexancarbonsäure-4-(4-n-heptylcyclohexyl)-phenylester.
4-n-Pentylcyclohexancarbonsäure-4-(4-methylcyclohexyl)-phenylester,
4-n-Pentylcyclohexancarbonsäure-4-(4-äthylcyclohexyl)-phenylester,
4-n-Pentylcyclohexancarbonsäure-4-(4-n-propylcyclohexyl)-phenylester, F. 42°C, S./N. 128°C, K. 187°C;
4-n-Pentylcyclohexancarbonsäure-4-(4-n-butylcyclohexyl)-phenylester,
4-n-Pentylcyclohexancarbonsäure-4-(4-n-pentylcyclohexyl)-phenylester,
4-n-Pentylcyclohexancarbonsäure-4-(4-n-hexylcyclohexyl)-phenylester,
4-n-Pentylcyclohexancarbonsäure-4-(4-n-heptylcyclohexyl)-phenylester, F. 32°C, K. 180°C;
4-n-Hexylcyclohexancarbonsäure-4-(4-methylcyclohexyl)-phenylester,
4-n-Hexylcyclohexancarbonsäure-4-(4-äthylcyclohexyl)-phenylester,
4-n-Hexylcyclohexancarbonsäure-4-(4-n-propylcyclohexyl)-phenylester,
4-n-Hexylcyclohexancarbonsäure-4-(4-n-butylcyclohexyl)-phenylester,
4-n-Hexylcyclohexancarbonsäure-4-(4-n-pentylcyclohexyl)-phenylester,
4-n-Hexylcyclohexancarbonsäure-4-(4-n-hexylcyclohexyl)-phenylester,
4-n-Hexylcyclohexancarbonsäure-4-(4-n-heptylcyclohexyl)-phenylester.
4-n-Heptylcyclohexancarbonsäure-4-(4-methylcyclohexyl)-phenylester,
4-n-Heptylcyclohexancarbonsäure-4-(4-äthylcyclohexyl)-phenylester,
4-n-Heptylcyclohexancarbonsäure-4-(4-n-propylcyclohexyl)-phenylester,
4-n-Heptylcyclohexancarbonsäure-4-(4-n-butylcyclohexyl)-phenylester,

4-n-Heptylcyclohexancarbonsäure-4-(4-n-pentylcyclohexyl)-phenylester,
4-n-Heptylcyclohexancarbonsäure-4-(4-n-hexylcyclohexyl)-phenylester,
4-n-Heptylcyclohexancarbonsäure-4-(4-n-heptylcyclohexyl)-phenylester.

Beispiel 2

16,5 g 4-n-Propylbenzoesäure und 24,7 g 4-(4-n-Pentylcyclohexyl)-phenol werden mit 0,25 g konzentrierter Schwefelsäure und 0,15 g Borsäure in 250 ml Toluol in einem mit Wasserabscheider versehenen Rundkolben 24 Stunden unter Rückfluß zum Sieden erhitzt; dabei werden etwa 0,8 ml Wasser azeotrop abgeschieden. Das Reaktionsgemisch wird dreimal mit je 200 ml Wasser, einmal mit 200 ml 5 %iger wäßriger Natriumbikarbonatlösung und weitere zweimal mit je 200 ml Wasser gewaschen und über Natriumsulfat getrocknet. Nach Abdestillieren des Toluols wird der erhaltene 4-n-Propyl-benzoesäure-4'-(4-n-pentylcyclohexyl)-phenylester aus Methanol umkristallisiert.

Analog werden hergestellt:

4-Methylbenzoesäure-4'-(4-methylcyclohexyl)-phenylester,
4-Methylbenzoesäure-4'-(4-äthylcyclohexyl)-phenylester,
4-Methylbenzoesäure-4'-(4-n-propylcyclohexyl)-phenylester,
4-Methylbenzoesäure-4'-(4-n-butylcyclohexyl)-phenylester,
4-Methylbenzoesäure-4'-(4-n-pentylcyclohexyl)-phenylester,
4-Methylbenzoesäure-4'-(4-n-hexylcyclohexyl)-phenylester,
4-Methylbenzoesäure-4'-(4-n-heptylcyclohexyl)-phenylester,
4-Methylbenzoesäure-4'-(4-n-oktylcyclohexyl)-phenylester,
4-Methylbenzoesäure-4'-[4-(2-methylbutyl)-cyclohexyl]-phenylester.
4-Äthylbenzoesäure-4'-(4-methylcyclohexyl)-phenylester,
4-Äthylbenzoesäure-4'-(4-äthylcyclohexyl)-phenylester,
4-Äthylbenzoesäure-4'-(4-n-propylcyclohexyl)-phenylester,
4-Äthylbenzoesäure-4'-(4-n-butylcyclohexyl)-phenylester,
4-Äthylbenzoesäure-4'-(4-n-pentylcyclohexyl)-phenylester,
4-Äthylbenzoesäure-4'-(4-n-hexylcyclohexyl)-phenylester,
4-Äthylbenzoesäure-4'-(4-n-heptylcyclohexyl)-phenylester,
4-Äthylbenzoesäure-4'-(4-n-oktylcyclohexyl)-phenylester,
4-Äthylbenzoesäure-4'-[4-(2-methylbutyl)-cyclohexyl]-phenylester.
4-n-Propylbenzoesäure-4'-(4-methylcyclohexyl)-phenylester,
4-n-Propylbenzoesäure-4'-(4-äthylcyclohexyl)-Phenylester,
4-n-Propylbenzoesäure-4'-(4-n-propylcyclohexyl)-phenylester,
4-n-Propylbenzoesäure-4'-(4-n-butylcyclohexyl)-phenylester,
4-n-Propylbenzoesäure-4'-(4-n-hexylcyclohexyl)-phenylester,
4-n-Propylbenzoesäure-4'-(4-n-heptylcyclohexyl)-phenylester,
4-n-Propylbenzoesäure-4'-(4-n-oktylcyclohexyl)-phenylester,
4-n-Propylbenzoesäure-4'-[4-(2-methylbutyl)-cyclohexyl]-phenylester.
4-n-Butylbenzoesäure-4'-(4-methylcyclohexyl)-phenylester,
4-n-Butylbenzoesäure-4'-(4-äthylcyclohexyl)-phenylester,
4-n-Butylbenzoesäure-4'-(4-n-propylcyclohexyl)-phenylester,
4-n-Butylbenzoesäure-4'-(4-n-butylcyclohexyl)-phenylester,
4-n-Butylbenzoesäure-4'-(4-n-pentylcyclohexyl)-phenylester,
4-n-Butylbenzoesäure-4'-(4-n-hexylcyclohexyl)-phenylester,
4-n-Butylbenzoesäure-4'-(4-n-heptylcyclohexyl)-phenylester,
4-n-Butylbenzoesäure-4'-(4-n-oktylcyclohexyl)-phenylester,
4-n-Butylbenzoesäure-4'-[4-(2-methylbutyl)-cyclohexyl]-phenylester.
4-n-Pentylbenzoesäure-4'-(4-methylcyclohexyl)-phenylester,
4-n-Pentylbenzoesäure-4'-(4-äthylcyclohexyl)-phenylester,
4-n-Pentylbenzoesäure-4'-(4-n-propylcyclohexyl)-phenylester, F. 98°C, K. 180°C;
4-n-Pentylbenzoesäure-4'-(4-n-butylcyclohexyl)-phenylester, F. 96°C, K. 171°C;
4-n-Pentylbenzoesäure-4'-(4-n-pentylcyclohexyl)-phenylester,
4-n-Pentylbenzoesäure-4'-(4-n-hexylcyclohexyl)-phenylester,
4-n-Pentylbenzoesäure-4'-(4-n-heptylcyclohexyl)-phenylester, F. 78°C, S./N. 104°C, K. 165°C;
4-n-Pentylbenzoesäure-4'-(4-n-oktylcyclohexyl)-phenylester,
4-n-Pentylbenzoesäure-4'-[4-(2-methylbutyl)-cyclohexyl]-phenylester.
4-n-Hexylbenzoesäure-4'-(4-methylcyclohexyl)-phenylester,
4-n-Hexylbenzoesäure-4'-(4-äthylcyclohexyl)-phenylester,
4-n-Hexylbenzoesäure-4'-(4-n-propylcyclohexyl)-phenylester,
4-n-Hexylbenzoesäure-4'-(4-n-butylcyclohexyl)-phenylester,
4-n-Hexylbenzoesäure-4'-(4-n-pentylcyclohexyl)-phenylester,
4-n-Hexylbenzoesäure-4'-(4-hexylcyclohexyl)-phenylester,
4-n-Hexylbenzoesäure-4'-(4-n-heptylcyclohexyl)-phenylester,
4-n-Hexylbenzoesäure-4'-(4-n-oktylcyclohexyl)-phenylester,

4-n-Hexylbenzoesäure-4'-[4-(2-methylbutyl)-cyclohexyl]-phenylester.
4-n-Heptylbenzoesäure-4'-(4-methylcyclohexyl)-phenylester,
4-n-Heptylbenzoesäure-4'-(4-äthylcyclohexyl)-phenylester,
4-n-Heptylbenzoesäure-4'-(4-n-propylcyclohexyl)-phenylester,
4-n-Heptylbenzoesäure-4'-(4-n-butylcyclohexyl)-phenylester,
4-n-Heptylbenzoesäure-4'-(4-n-pentylcyclohexyl)-phenylester,
4-n-Heptylbenzoesäure-4'-(4-n-hexylcyclohexyl)-phenylester,
4-n-Heptylbenzoesäure-4'-(4-n-heptylcyclohexyl)-phenylester,
4-n-Heptylbenzoesäure-4'-(4-n-oktylcyclohexyl)-phenylester,
4-n-Heptylbenzoesäure-4'-[4-(2-methylbutyl)-cyclohexyl]-phenylester.
4-n-Oktylbenzoesäure-4'-(4-methylcyclohexyl)-phenylester,
4-n-Oktylbenzoesäure-4'-(4-äthylcyclohexyl)-phenylester,
4-n-Oktylbenzoesäure-4'-(4-n-propylcyclohexyl)-phenylester,
4-n-Oktylbenzoesäure-4'-(4-n-butylcyclohexyl)-phenylester,
4-n-Oktylbenzoesäure-4'-(4-n-pentylcyclohexyl)-phenylester,
4-n-Oktylbenzoesäure-4'-(4-n-hexylcyclohexyl)-phenylester,
4-n-Oktylbenzoesäure-4'-(4-n-heptylcyclohexyl)-phenylester,
4-n-Oktylbenzoesäure-4'-(4-n-oktylcyclohexyl)-phenylester,
4-n-Oktylbenzoesäure-4'-[4-(2-methylbutyl)-cyclohexyl]-phenylester.
4-(1-Methylbutyl)-benzoesäure-4'-(4-methylcyclohexyl)-phenylester,
4-(1-Methylbutyl)-benzoesäure-4'-(4-äthylcyclohexyl)-phenylester,
4-(1-Methylbutyl)-benzoesäure-4'-(4-n-propylcyclohexyl)-phenylester,
4-(1-Methylbutyl)-benzoesäure-4'-(4-n-butylcyclohexyl)-phenylester,
4-(1-Methylbutyl)-benzoesäure-4'-(4-n-pentylcyclohexyl)-phenylester,
4-(1-Methylbutyl)-benzoesäure-4'-(4-n-hexylcyclohexyl)-phenylester,
4-(1-Methylbutyl)-benzoesäure-4'-(4-n-heptylcyclohexyl)-phenylester,
4-(1-Methylbutyl)-benzoesäure-4'-(4-n-oktylcyclohexyl)-phenylester.
4-(4-Methylcyclohexyl)-cyclohexancarbonsäure-4'-methylphenyl-ester,
4-(4-Methylcyclohexyl)-cyclohexancarbonsäure-4'-äthylphenyl-ester,
4-(4-Methylcyclohexyl)-cyclohexancarbonsäure-4'-n-propylphenyl-ester,
4-(4-Methylcyclohexyl)-cyclohexancarbonsäure-4'-n-butylphenyl-ester,
4-(4-Methylcyclohexyl)-cyclohexancarbonsäure-4'-n-pentylphenyl-ester,
4-(4-Methylcyclohexyl)-cyclohexancarbonsäure-4'-n-hexylphenyl-ester,
4-(4-Methylcyclohexyl)-cyclohexancarbonsäure-4'-n-heptylphenyl-ester,
4-(4-Methylcyclohexyl)-cyclohexancarbonsäure-4'-n-oktylphenyl-ester,
4-(4-Methylcyclohexyl)-cyclohexancarbonsäure-4'-(2-methylbutyl)-phenyl-ester,
4-(4-Methylcyclohexyl)-cyclohexancarbonsäure-4'-cyanophenyl-ester,
4-(4-Methylcyclohexyl)-cyclohexancarbonsäure-4'-methoxyphenyl-ester,
4-(4-Methylcyclohexyl)-cyclohexancarbonsäure-4'-äthoxyphenyl-ester,
4-(4-Methylcyclohexyl)-cyclohexancarbonsäure-4'-n-propyloxyphenyl-ester,
4-(4-Methylcyclohexyl)-cyclohexancarbonsäure-4'-n-butyloxyphenyl-ester,
4-(4-Methylcyclohexyl)-cyclohexancarbonsäure-4'-n-pentyloxyphenyl-ester,
4-(4-Methylcyclohexyl)-cyclohexancarbonsäure-4'-n-hexyloxyphenyl-ester,
4-(4-Methylcyclohexyl)-cyclohexancarbonsäure-4'-acetoxyphenyl-ester,
4-(4-Methylcyclohexyl)-cyclohexancarbonsäure-4'-propionyloxyphenyl-ester,
4-(4-Methylcyclohexyl)-cyclohexancarbonsäure-4'-n-butanoyloxyphenyl-ester,
4-(4-Methylcyclohexyl)-cyclohexancarbonsäure-4'-n-pentanoyloxyphenyl-ester,
4-(4-Methylcyclohexyl)-cyclohexancarbonsäure-4'-n-hexanoyloxyphenyl-ester,
4-(4-Methylcyclohexyl)-cyclohexancarbonsäure-4'-heptanoyloxyphenyl-ester.
4-(4-Aethylcyclohexyl)-cyclohexancarbonsäure-4'-methylphenyl-ester,
4-(4-Aethylcyclohexyl)-cyclohexancarbonsäure-4'-äthylphenyl-ester,
4-(4-Aethylcyclohexyl)-cyclohexancarbonsäure-4'-n-propylphenyl-ester,
4-(4-Aethylcyclohexyl)-cyclohexancarbonsäure-4'-n-butylphenyl-ester,
4-(4-Aethylcyclohexyl)-cyclohexancarbonsäure-4'-n-pentylphenyl-ester,
4-(4-Aethylcyclohexyl)-cyclohexancarbonsäure-4'-n-hexylphenyl-ester,
4-(4-Aethylcyclohexyl)-cyclohexancarbonsäure-4'-n-heptylphenyl-ester,
4-(4-Aethylcyclohexyl)-cyclohexancarbonsäure-4'-(2-methylbutyl)-phenyl-ester,
4-(4-Aethylcyclohexyl)-cyclohexancarbonsäure-4'-cyanophenyl-ester,
4-(4-Aethylcyclohexyl)-cyclohexancarbonsäure-4'-methoxyphenyl-ester,
4-(4-Aethylcyclohexyl)-cyclohexancarbonsäure-4'-äthoxyphenyl-ester,
4-(4-Aethylcyclohexyl)-cyclohexancarbonsäure-4'-n-propyloxyphenyl-ester,
4-(4-Aethylcyclohexyl)-cyclohexancarbonsäure-4'-n-butyloxyphenyl-ester,
4-(4-Aethylcyclohexyl)-cyclohexancarbonsäure-4'-n-pentyloxyphenyl-ester,
4-(4-Aethylcyclohexyl)-cyclohexancarbonsäure-4'-n-hexyloxyphenyl-ester,
4-(4-Aethylcyclohexyl)-cyclohexancarbonsäure-4'-acetoxyphenyl-ester,

4-(4-Aethylcyclohexyl)-cyclohexancarbonsäure-4'-propionyloxyphenyl-ester,
4-(4-Aethylcyclohexyl)-cyclohexancarbonsäure-4'-n-butanoyloxyphenyl-ester,
4-(4-Aethylcyclohexyl)-cyclohexancarbonsäure-4'-n-pentanoyloxyphenyl-ester,
4-(4-Aethylcyclohexyl)-cyclohexancarbonsäure-4'-n-hexanoyloxyphenyl-ester,
4-(4-Aethylcyclohexyl)-cyclohexancarbonsäure-4'-n-heptanoyloxyphenyl-ester.
4-(4-n-Propylcyclohexyl)-cyclohexancarbonsäure-4'-methylphenyl-ester,
4-(4-n-Propylcyclohexyl)-cyclohexancarbonsäure-4'-äthylphenyl-ester,
4-(4-n-Propylcyclohexyl)-cyclohexancarbonsäure-4'-n-propylphenyl-ester, F. 60°C, S./N. 152°C, K. 203°C;
4-(4-n-Propylcyclohexyl)-cyclohexancarbonsäure-4'-n-butylphenyl-ester,
4-(4-n-Propylcyclohexyl)-cyclohexancarbonsäure-4'-n-pentylphenyl-ester, F. 34°C, S./N. 159°C, K. 192°C;
4-(4-n-Propylcyclohexyl)-cyclohexancarbonsäure-4'-n-hexylphenyl-ester,
4-(4-n-Propylcyclohexyl)-cyclohexancarbonsäure-4'-n-heptylphenyl-ester,
4-(4-n-Propylcyclohexyl)-cyclohexancarbonsäure-4'-(2-methylbutyl)-phenyl-ester,
4-(4-n-Propylcyclohexyl)-cyclohexancarbonsäure-4'-cyanophenyl-ester, F. 93°C, K. 210°C;
4-(4-n-Propylcyclohexyl)-cyclohexancarbonsäure-4'-methoxyphenyl-ester,
4-(4-n-Propylcyclohexyl)-cyclohexancarbonsäure-4'-äthoxyphenyl-ester,
4-(4-n-Propylcyclohexyl)-cyclohexancarbonsäure-4'-n-propyloxyphenyl-ester,
4-(4-n-Propylcyclohexyl)-cyclohexancarbonsäure-4'-n-butyloxyphenyl-ester,
4-(4-n-Propylcyclohexyl)-cyclohexancarbonsäure-4'-n-pentyloxyphenyl-ester,
4-(4-n-Propylcyclohexyl)-cyclohexancarbonsäure-4'-n-hexyloxyphenyl-ester,
4-(4-n-Propylcyclohexyl)-cyclohexancarbonsäure-4'-acetoxyphenyl-ester,
4-(4-n-Propylcyclohexyl)-cyclohexancarbonsäure-4'-propionyloxyphenyl-ester,
4-(4-n-Propylcyclohexyl)-cyclohexancarbonsäure-4'-n-butanoyloxyphenyl-ester,
4-(4-n-Propylcyclohexyl)-cyclohexancarbonsäure-4'-n-pentanoyloxyphenyl-ester,
4-(4-n-Propylcyclohexyl)-cyclohexancarbonsäure-4'-n-hexanoyloxyphenyl-ester,
4-(4-n-Propylcyclohexyl)-cyclohexancarbonsäure-4'-n-heptanoyloxyphenyl-ester.
4-(4-n-Butylcyclohexyl)-cyclohexancarbonsäure-4'-methylphenyl-ester,
4-(4-n-Butylcyclohexyl)-cyclohexancarbonsäure-4'-äthylphenyl-ester,
4-(4-n-Butylcyclohexyl)-cyclohexancarbonsäure-4'-n-propylphenyl-ester,
4-(4-n-Butylcyclohexyl)-cyclohexancarbonsäure-4'-n-butylphenyl-ester,
4-(4-n-Butylcyclohexyl)-cyclohexancarbonsäure-4'-n-pentylphenyl-ester,
4-(4-n-Butylcyclohexyl)-cyclohexancarbonsäure-4'-n-hexylphenyl-ester,
4-(4-n-Butylcyclohexyl)-cyclohexancarbonsäure-4'-n-heptylphenyl-ester,
4-(4-n-Butylcyclohexyl)-cyclohexancarbonsäure-4'-(2-methylbutyl)-phenyl-ester,
4-(4-n-Butylcyclohexyl)-cyclohexancarbonsäure-4'-cyanophenyl-ester,
4-(4-n-Butylcyclohexyl)-cyclohexancarbonsäure-4'-methoxyphenyl-ester,
4-(4-n-Butylcyclohexyl)-cyclohexancarbonsäure-4'-äthoxyphenyl-ester,
4-(4-n-Butylcyclohexyl)-cyclohexancarbonsäure-4'-n-propyloxyphenyl-ester,
4-(4-n-Butylcyclohexyl)-cyclohexancarbonsäure-4'-n-butyloxyphenyl-ester,
4-(4-n-Butylcyclohexyl)-cyclohexancarbonsäure-4'-n-pentyloxyphenyl-ester,
4-(4-n-Butylcyclohexyl)-cyclohexancarbonsäure-4'-n-hexyloxypheny-ester,
4-(4-n-Butylcyclohexyl)-cyclohexancarbonsäure-4'-acetoxyphenyl-ester,
4-(4-n-Butylcyclohexyl)-cyclohexancarbonsäure-4'-propionyloxyphenyl-ester,
4-(4-n-Butylcyclohexyl)-cyclohexancarbonsäure-4'-n-butanoyloxyphenyl-ester,
4-(4-n-Butylcyclohexyl)-cyclohexancarbonsäure-4'-n-pentanoyloxyphenyl-ester,
4-(4-n-Butylcyclohexyl)-cyclohexancarbonsäure-4'-n-hexanoyloxyphenyl-ester.
4-(4-n-Pentylcyclohexyl)-cyclohexancarbonsäure-4'-methylphenyl-ester,
4-(4-n-Pentylcyclohexyl)-cyclohexancarbonsäure-4'-äthylphenyl-ester,
4-(4-n-Pentylcyclohexyl)-cyclohexancarbonsäure-4'-propylphenyl-ester,
4-(4-n-Pentylcyclohexyl)-cyclohexancarbonsäure-4'-n-butylphenyl-ester,
4-(4-n-Pentylcyclohexyl)-cyclohexancarbonsäure-4'-n-pentylphenyl-ester,
4-(4-n-Pentylcyclohexyl)-cyclohexancarbonsäure-4'-n-hexylphenyl-ester,
4-(4-n-Pentylcyclohexyl)-cyclohexancarbonsäure-4'-n-heptylphenyl-ester,
4-(4-n-Pentylcyclohexyl)-cyclohexancarbonsäure-4'-(2-methylbutyl)-phenyl-ester,
4-(4-n-Pentylcyclohexyl)-cyclohexancarbonsäure-4'-cyanophenyl-ester, F. 92°C, K. 232°C;
4-(4-n-Pentylcyclohexyl)-cyclohexancarbonsäure-4'-methoxyphenyl-ester,
4-(4-n-Pentylcyclohexyl)-cyclohexancarbonsäure-4'-äthoxyphenyl-ester,
4-(4-n-Pentylcyclohexyl)-cyclohexancarbonsäure-4'-n-propyloxyphenyl-ester,
4-(4-n-Pentylcyclohexyl)-cyclohexancarbonsäure-4'-n-butyloxyphenyl-ester,
4-(4-n-Pentylcyclohexyl)-cyclohexancarbonsäure-4'-n-pentyloxyphenyl-ester,
4-(4-n-Pentylcyclohexyl)-cyclohexancarbonsäure-4'-n-hexyloxyphenyl-ester,
4-(4-n-Pentylcyclohexyl)-cyclohexancarbonsäure-4'-acetoxyphenyl-ester,
4-(4-n-Pentylcyclohexyl)-cyclohexancarbonsäure-4'-propionyloxyphenyl-ester,

4-(4-n-Pentylcyclohexyl)-cyclohexancarbonsäure-4'-n-butanoyloxyphenyl-ester,
4-(4-n-Pentylcyclohexyl)-cyclohexancarbonsäure-4'-n-pentanoyloxyphenyl-ester,
4-(4-n-Pentylcyclohexyl)-cyclohexancarbonsäure-4'-n-hexanoyloxyphenyl-ester.
4-(4-n-Hexylcyclohexyl)-cyclohexancarbonsäure-4'-methylphenyl-ester,
4-(4-n-Hexylcyclohexyl)-cyclohexancarbonsäure-4'-äthylphenyl-ester,
4-(4-n-Hexylcyclohexyl)-cyclohexancarbonsäure-4'-n-propylphenyl-ester,
4-(4-n-Hexylcyclohexyl)-cyclohexancarbonsäure-4'-n-butylphenyl-ester,
4-(4-n-Hexylcyclohexyl)-cyclohexancarbonsäure-4'-n-pentylphenyl-ester,
4-(4-n-Hexylcyclohexyl)-cyclohexancarbonsäure-4'-n-hexylphenyl-ester,
4-(4-n-Hexylcyclohexyl)-cyclohexancarbonsäure-4'-(2-methylbutyl)-phenyl-ester,
4-(4-n-Hexylcyclohexyl)-cyclohexancarbonsäure-4'-cyanophenyl-ester,
4-(4-n-Hexylcyclohexyl)-cyclohexancarbonsäure-4'-methoxyphenyl-ester,
4-(4-n-Hexylcyclohexyl)-cyclohexancarbonsäure-4'-äthoxyphenyl-ester,
4-(4-n-Hexylcyclohexyl)-cyclohexancarbonsäure-4'-n-propyloxyphenyl-ester,
4-(4-n-Hexylcyclohexyl)-cyclohexancarbonsäure-4'-n-butyloxyphenyl-ester,
4-(4-n-Hexylcyclohexyl)-cyclohexancarbonsäure-4'-acetoxyphenyl-ester,
4-(4-n-Hexylcyclohexyl)-cyclohexancarbonsäure-4'-propionyloxyphenyl-ester,
4-(4-n-Hexylcyclohexyl)-cyclohexancarbonsäure-4'-n-butanoyloxyphenyl-ester,
4-(4-n-Hexylcyclohexyl)-cyclohexancarbonsäure-4'-n-pentanoyloxyphenyl-ester.
4-(4-n-Heptylcyclohexyl)-cyclohexancarbonsäure-4'-methylphenyl-ester,
4-(4-n-Heptylcyclohexyl)-cyclohexancarbonsäure-4'-äthylphenyl-ester,
4-(4-n-Heptylcyclohexyl)-cyclohexancarbonsäure-4'-n-propylphenyl-ester,
4-(4-n-Heptylcyclohexyl)-cyclohexancarbonsäure-4'-n-butylphenyl-ester,
4-(4-n-Heptylcyclohexyl)-cyclohexancarbonsäure-4'-n-pentylphenyl-ester,
4-(4-n-Heptylcyclohexyl)-cyclohexancarbonsäure-4'-(2-methylbutyl)-phenyl-ester,
4-(4-n-Heptylcyclohexyl)-cyclohexancarbonsäure-4'-cyanophenyl-ester, F. 90°C, S./N. 118°C, K. 222°C;
4-(4-n-Heptylcyclohexyl)-cyclohexancarbonsäure-4'-methoxyphenyl-ester,
4-(4-n-Heptylcyclohexyl)-cyclohexancarbonsäure-4'-äthoxyphenyl-ester,
4-(4-n-Heptylcyclohexyl)-cyclohexancarbonsäure-4'-n-propyloxyphenyl-ester,
4-(4-n-Heptylcyclohexyl)-cyclohexancarbonsäure-4'-n-butyloxyphenyl-ester,
4-(4-n-Heptylcyclohexyl)-cyclohexancarbonsäure-4'-acetoxyphenyl-ester,
4-(4-n-Heptylcyclohexyl)-cyclohexancarbonsäure-4'-propionyloxyphenyl-ester,
4-(4-n-Heptylcyclohexyl)-cyclohexancarbonsäure-4'-n-butanoyloxyphenyl-ester,
4-(4-n-Heptylcyclohexyl)-cyclohexancarbonsäure-4'-n-pentanoyloxyphenyl-ester.
4-(4-n-Oktylcyclohexyl)-cyclohexancarbonsäure-4'-methylphenyl-ester,
4-(4-n-Oktylcyclohexyl)-cyclohexancarbonsäure-4'-äthylphenyl-ester,
4-(4-n-Oktylcyclohexyl)-cyclohexancarbonsäure-4'-n-propylphenyl-ester,
4-(4-n-Oktylcyclohexyl)-cyclohexancarbonsäure-4'-n-butylphenyl-ester,
4-(4-n-Oktylcyclohexyl)-cyclohexancarbonsäure-4'-(2-methylbutyl)-phenyl-ester,
4-(4-n-Oktylcyclohexyl)-cyclohexancarbonsäure-4'-cyanophenyl-ester,
4-(4-n-Oktylcyclohexyl)-cyclohexancarbonsäure-4'-methoxyphenyl-ester,
4-(4-n-Oktylcyclohexyl)-cyclohexancarbonsäure-4'-äthoxyphenyl-ester,
4-(4-n-Oktylcyclohexyl)-cyclohexancarbonsäure-4'-n-propyloxyphenyl-ester,
4-(4-n-Oktylcyclohexyl)-cyclohexancarbonsäure-4'-n-butyloxyphenyl-ester,
4-(4-n-Oktylcyclohexyl)-cyclohexancarbonsäure-4'-acetoxyphenyl-ester,
4-(4-n-Oktylcyclohexyl)-cyclohexancarbonsäure-4'-propionyloxyphenyl-ester,
4-(4-n-Oktylcyclohexyl)-cyclohexancarbonsäure-4'-n-butanoyloxyphenyl-ester.
4-[4-(2-Methylbutyl)-cyclohexyl]-cyclohexancarbonsäure-4'-methylphenyl-ester,
4-[4-(2-Methylbutyl)-cyclohexyl]-cyclohexancarbonsäure-4'-äthylphenyl-ester,
4-[4-(2-Methylbutyl)-cyclohexyl]-cyclohexancarbonsäure-4'-n-propylphenyl-ester,
4-[4-(2-Methylbutyl)-cyclohexyl]-cyclohexancarbonsäure-4'-n-butylphenyl-ester,
4-[4-(2-Methylbutyl)-cyclohexyl]-cyclohexancarbonsäure-4'-n-pentylphenyl-ester,
4-[4-(2-Methylbutyl)-cyclohexyl]-cyclohexancarbonsäure-4'-n-hexylphenyl-ester,
4-[4-(2-Methylbutyl)-cyclohexyl]-cyclohexancarbonsäure-4'-n-heptylphenyl-ester,
4-[4-(2-Methylbutyl)-cyclohexyl]-cyclohexancarbonsäure-4'-n-oktylphenyl-ester,
4-[4-(2-Methylbutyl)-cyclohexyl]-cyclohexancarbonsäure-4'-cyanophenyl-ester,
4-[4-(2-Methylbutyl)-cyclohexyl]-cyclohexancarbonsäure-4'-methoxyphenyl-ester,
4-[4-(2-Methylbutyl)-cyclohexyl]-cyclohexancarbonsäure-4'-äthoxyphenyl-ester,
4-[4-(2-Methylbutyl)-cyclohexyl]-cyclohexancarbonsäure-4'-n-propyloxyphenyl-ester,
4-[4-(2-Methylbutyl)-cyclohexyl]-cyclohexancarbonsäure-4'-n-butyloxyphenyl-ester,
4-[4-(2-Methylbutyl)-cyclohexyl]-cyclohexancarbonsäure-4'-n-pentyloxyphenyl-ester,
4-[4-(2-Methylbutyl)-cyclohexyl]-cyclohexancarbonsäure-4'-n-hexyloxyphenyl-ester,
4-[4-(2-Methylbutyl)-cyclohexyl]-cyclohexancarbonsäure-4'-acetoxyphenyl-ester,
4-[4-(2-Methylbutyl)-cyclohexyl]-cyclohexancarbonsäure-4'-propionyloxyphenyl-ester,

4-[4-(2-Methylbutyl)-cyclohexyl]-cyclohexancarbonsäure-4'-n-butanoyloxyphenyl-ester,
4-[4-(2-Methylbutyl)-cyclohexyl]-cyclohexancarbonsäure-4'-n-pentanoyloxyphenyl-ester,
4-[4-(2-Methylbutyl)-cyclohexyl]-cyclohexancarbonsäure-4'-n-hexanoyloxyphenyl-ester,
4-[4-(2-Methylbutyl)-cyclohexyl]-cyclohexancarbonsäure-4'-n-heptanoyloxyphenyl-ester.

Die folgenden Beispiele betreffen flüssigkristalline Dielektrika nach der Erfindung:

Beispiel 3

Eine Mischung aus 55% 4-n-Hexanoyloxybenzoesäure-4'-n-propylphenylester und 45% 4-n-Hexanoyloxybenzoesäure-4'-n-heptylphenylester hat einen F. von 20° und einen K. von 56°. Ein Dielektrikum aus 94% dieser Grundmischung und 6% des erfindungsgemäßen 4-(4-n-Pentylcyclohexyl)-cyclohexan-(1)-carbonsäure-4'-cyanophenylesters hat einen F. von weniger also 20° (eine genaue Messung ist wegen des Auftretens von Unterkühlungserscheinungen sehr schwierig) und einen K. von 66,5°.

Beispiel 4

4-n-Pentyl-4'-cyanobiphenyl hat einen F. von 22,5° und einen K. von 35°. Durch Zusatz von 10% (bezogen auf das Gesamtgewicht der Mischung) des erfindungsgemäßen 4-(4-n-Hexylcyclohexyl)-benzoesäure-4'-n-heptylcyclohexylesters sinkt der F. auf 22°, während der K. auf 44,5° steigt.

Beispiel 5

Eine Mischung aus 67% Anissäure-4-n-pentylphenylester und 33% 4-n-Hexyloxybenzoesäure-4'-n-pentylphenyl-ester hat einen F. von 16° und einen K. von 49°. Ein Dielektrikum aus 90% dieser Grundmischung und 10% des erfindungsgemäßen 4-(4-n-Heptylcyclohexyl)-benzoesäure-4'-n-pentylphenylesters hat einen F. von etwa 10° und einen K. von 61°.

Beispiel 6

4-(4-n-Heptylcyclohexyl)-benzonitril hat einen F. von 30° und einen K. von 57°. Durch Zusatz von 20% des erfindungsgemäßen 4-(4-n-Heptylcyclohexyl)-benzoesäure-4'-cyanophenylesters wird der Schmelzpunkt praktisch nicht verändert, während der Klärpunkt auf 79° steigt.

Beispiel 7

Eine Mischung aus gleichen Gewichtsteilen 4-n-Pentyl-4'-cyanobiphenyl und 4-n-Heptyl-4'-cyanobiphenyl hat einen K. von 38,5°. Durch Zusatz von 10% des erfindungsgemäßen 4-(4-n-Heptylcyclohexyl)-benzoesäure-4'-n-pentylphenylesters wird der K. auf 47° erhöht.

Beispiel 8

Eine Mischung aus 19% 4-(4-n-Propylcyclohexyl)-benzonitril, 28% 4-(4-n-Pentylcyclohexyl)-benzonitril, 20% 4-(4-n-Heptylcyclohexyl)-benzonitril, 12% 4-(4-n-Pentylcyclohexyl)-4'-cyanobiphenyl, 11% 4-(4-n-Propylcyclohexyl)-benzoesäure-4'-n-propylphenylester und 10% 4-(4-n-Propylcyclohexyl)-benzoesäure-4'-n-propylcyclohexylester besitzt den außergewöhnlich breiten nematischen Bereich von —10° bis +86° und eine Viskosität von 36 cP.

Beispiel 9

Eine Mischung aus 24% 4-(4-n-Propylcyclohexyl)-benzonitril, 35% 4-(4-n-Pentylcyclohexyl)-benzonitril, 13% 4-(4-n-Propylcyclohexyl)-benzoesäure-4'-n-propylphenyl-ester, 12% 4-(4-n-Propylcyclohexyl)-benzoesäure-4'-n-propylcyclohexylester und 16% 4-(4-n-Pentylcyclohexyl)-benzoesäure-4'-n-propylcyclohexylester besitzt einen nematischen Bereich von —5° bis +86°, eine Viskosität von 42 cP und eine sehr geringe Temperaturabhängigkeit der Schwellenspannung.

**Patentansprüche**

1. Cyclohexanderivate der allgemeinen Formel (I)

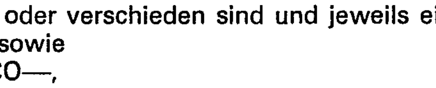

(I)

worin

die Ringe A und B gleich oder verschieden sind und jeweils einen 1,4-disubstituierten Phenyl- oder Cyclohexylring bedeuten, sowie

X —CO—O— oder —O—CO—,

$R_1$ Alkyl mit 1—8 Kohlenstoffatomen, und

$R_2$ Alkyl mit 1—8 Kohlenstoffatomen, und wenn der Ring B ein Phenylring ist, auch Alkoxy oder Alkanoyloxy mit bis zu 8 Kohlenstoffatomen oder —CN bedeutet.

2. Cyclohexanderivate nach Anspruch 1, worin X —CO—O— bedeutet.

3. Cyclohexanderivate nach einem der Ansprüche 1—2, worin $R_1$ geradkettiges Alkyl mit 1—6 Kohlenstoffatomen bedeutet.

4. Cyclohexanderivate nach einem der Ansprüche 1—3, worin $R_2$ geradkettiges Alkyl mit 1—6 Kohlenstoffatomen bedeutet.

5. Cyclohexanderivate nach Anspruch 1, worin $R_2$ —CN bedeutet.

6. Dielektrikum für Flüssigkristall-Anzeigeelemente mit mindestens zwei flüssigkristallinen Komponenten, dadurch gekennzeichnet, daß mindestens eine dieser Komponenten ein Cyclohexanderivat der allgemeinen Formel (I) ist,

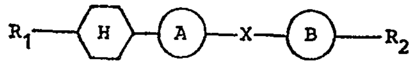

(I)

worin

die Ringe A und B gleich oder verschieden sind und jeweils einen 1,4-disubstituierten Phenyl- oder Cyclohexylring bedeuten, sowie

X —CO—O— oder —O—CO,

$R_1$ Alkyl mit 1—8 Kohlenstoffatomen, und

$R_2$ Alkyl mit 1—8 Kohlenstoffatomen, und wenn der Ring B ein Phenylring ist, auch Alkoxy oder Alkanoyloxy mit bis zu 8 Kohlenstoffatomen oder —CN bedeutet,

7. Dielektrikum nach Anspruch 6, dadurch gekennzeichnet, daß es 1—40 Gewichtsprozent eines oder mehrerer Cyclohexanderivate der allgemeinen Formel (I) enthält.

8. Verwendung eines Cyclohexanderivats der allgemeinen Formel (I)

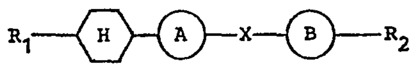

(I)

worin

die Ringe A und B gleich oder verschieden sind und jeweils einen 1,4-disubstituierten Phenyl- oder Cyclohexylring bedeuten, sowie

X —CO—O— oder —O—CO—,

$R_1$ Alkyl mit 1—8 Kohlenstoffatomen, und

$R_2$ Alkyl mit 1—8 Kohlenstoffatomen, und wenn der Ring B ein Phenylring ist, auch Alkoxy oder Alkanoyloxy mit bis zu 8 Kohlenstoffatomen oder —CN bedeutet,

als Komponente eines Dielektrikums für Flüssigkristall-Anzeigeelemente.

**Claims**

1. Cyclohexane derivatives of the general formula (I)

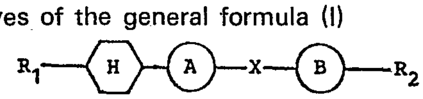

(I)

in which the rings A and B are identical or different and are each a 1,4-disubstituted phenyl or cyclohexyl ring and X is —CO—O— or —O—CO—, $R_1$ is alkyl with 1—8 carbon atoms and $R_2$ is alkyl with 1—8 carbon atoms, and if the ring B is a phenyl ring $R_2$ is also alkoxy or alkanoyloxy with up to 8 carbon atoms or —CN.

2. Cyclohexane derivatives according to Claim 1, in which X is CO—O—.

3. Cyclohexane derivatives according to one of Claims 1—2, in which $R_1$ is straight-chain alkyl with 1—6 carbon atoms.

4. Cyclohexane derivatives according to one of Claims 1—3, in which $R_2$ is straight-chain alkyl with 1—6 carbon atoms.

5. Cyclohexane derivatives according to Claim 1, in which $R_2$ is —CN.

6. Dielectric for liquid crystal display elements with at least two liquid crystal components, characterised in that at least one of these components is a cyclohexane derivative of the general formula (I)

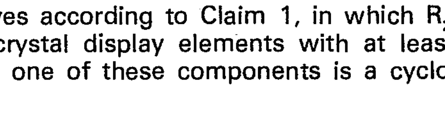

(I)

in which the rings A and B are identical or different and are each a 1,4-disubstituted phenyl or cyclohexyl ring and X is —CO—O— or —O—CO—, $R_1$ is alkyl with 1—8 carbon atoms and $R_2$ is alkyl with 1—8 carbon atoms, and if the ring B is a phenyl ring $R_2$ is also alkoxy or alkanoyloxy with up to 8 carbon atoms or —CN.

7. Dielectric according to Claim 6, characterised in that it contains 1—40 per cent by weight of one or more cyclohexane derivatives of the general formula (I).

8. Use of a cyclohexane derivative of the general formula (I)

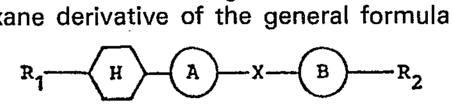

(I)

in which the rings A and B are identical or different and are each a 1,4-disubstituted phenyl or cyclohexyl ring and X is —CO—O— or —O—CO—, $R_1$ is alkyl with 1—8 carbon atoms and $R_2$ is alkyl with 1—8 carbon atoms, and if the ring B is a phenyl ring $R_2$ is also alkoxy or alkanoyloxy with up to 8 carbon atoms or —CN, as a component of a dielectric for liquid crystal display elements.

**Revendications**

1. Dérivés du cyclohexane de formule générale (I)

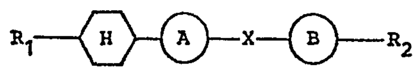

(I)

où

les noyaux A et B sont semblables ou différents et représentent chacun un noyau phényle ou cyclohexyle disubstitué en 1,4,

X représente —CO—O— ou —O—CO—

$R_1$ représente un alcoyle ayant de 1 à 8 atomes de carbone,

$R_2$ un alcoyle ayant de 1 à 8 atomes de carbone ou encore, lorsque le noyau B est un noyau phényle, un alcoxy ou un alcanoyloxy ayant jusqu'à 8 atomes de carbone ou —CN.

2. Dérivés du cyclohexane selon la revendication 1, où X représente —CO—O.

3. Dérivés du cyclohexane selon l'une des revendications 1 et 2, où $R_1$ représente un alcoyle à chaîne droite ayant de 1 à 6 atomes de carbone.

4. Dérivés du cyclohexane selon l'une des revendications 1 à 3, où $R_2$ représente un alcoyle à chaîne droite ayant de 1 à 6 atomes de carbone.

5. Dérivés de cyclohexane selon la revendication 1, où $R_2$ représente —CN.

6. Diélectrique pour éléments d'affichage à cristaux liquides avec au moins deux composants à cristaux liquides, caractérisé en ce qu'au moins un de ces composants est un dérivé du cyclohexane de formule générale (I)

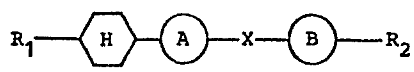

(I)

où

les noyaux A et B sont semblables ou différents et représentent chacun un noyau phényle ou cyclohexyle disubstitué en 1,4,

X représente —CO—O ou —O—CO—,

$R_1$ représente un alcoyle ayant de 1 à 8 atomes de carbone,

$R_2$ un alcoyle ayant de 1 à 8 atomes de carbone ou encore, lorsque le noyau B est un noyau phényle, un alcoxy ou un alcanoyloxy ayant jusqu'à 8 atomes de carbone ou —CN.

7. Diélectrique selon la revendication 6, caractérisé en ce qu'il contient de 1 à 40% en poids d'un ou plusieurs dérivés du cyclohexane de formule générale (I).

8. Utilisation d'un dérivé du cyclohexane de formule générale (I)

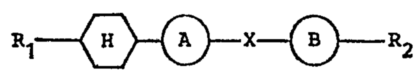

(I)

où

les noyaux A et B sont semblables ou différents et représentent chacun un noyau phényle ou cyclohexyle disubstitué en 1,4,

X représente —CO—O— ou —O—CO—

$R_1$ représente un alcoyle ayant de 1 à 8 atomes de carbone,

$R_2$ un alcoyle ayant de 1 à 8 atomes de carbone ou encore, lorsque le noyau B est un noyau phényle, un alcoxy ou un alcanoyloxy ayant jusqu'à 8 atomes de carbone ou —CN, comme composants d'un diélectrique pour éléments d'affichage à cristaux liquides.